# EUROPEAN PATENT SPECIFICATION

(11) **EP 4 330 865 B1**
(45) Date of publication and mention of the grant of the patent: **28.10.2026**
(21) Application number: 22722596.8
(22) Date of filing: 12.04.2022
(51) Int. Cl.: G06N 10/20, G06N 10/70

(54) **SYMMETRY-PROTECTED QUANTUM COMPUTATION**
SYMMETRIEGESCHÜTZTE QUANTENBERECHNUNG
CALCUL QUANTIQUE PROTÉGÉ PAR SYMÉTRIE

(30) Priority: 30.04.2021 US 202117246020
(43) Date of publication of application: 06.03.2024
(73) Proprietor: Microsoft Technology Licensing, LLC, Redmond, WA 98052-6399 (US)
(72) Inventor: FREEDMAN, Michael Hartley, Redmond, Washington 98052-6399 (US); HASTINGS, Matthew Benjamin, Redmond, Washington 98052-6399 (US); ZINI, Modjtaba Shokrian, Redmond, Washington 98052-6399 (US)
(74) Representative: Page White Farrer
(86) International application number: PCT/US2022/024316
(87) International publication number: WO 2022/231830

(56) References cited:
- TERRY RUDOLPH ET AL: "A relational quantum computer using only two-qubit total spin measurement and an initial supply of highly mixed single qubit states", ARXIV.ORG, CORNELL UNIVERSITY LIBRARY, 201 OLIN LIBRARY CORNELL UNIVERSITY ITHACA, NY 14853, 16 March 2005 (2005-03-16), XP080182829, DOI: 10.1088/1367-2630/7/1/228
- BROWNE DANIEL E ET AL: "Resource-efficient linear optical quantum computation INTRODUCTION", 9 February 2005 (2005-02-09), pages 1 - 5, XP055954684, Retrieved from the Internet <URL:https://arxiv.org/pdf/quant-ph/0405157.pdf> [retrieved on 20220824]
- STEPHEN P JORDAN: "Permutational Quantum Computing", ARXIV.ORG, CORNELL UNIVERSITY LIBRARY, 201 OLIN LIBRARY CORNELL UNIVERSITY ITHACA, NY 14853, 14 June 2009 (2009-06-14), XP080329151
- MICHAEL H FREEDMAN ET AL: "Symmetry Protected Quantum Computation", ARXIV.ORG, CORNELL UNIVERSITY LIBRARY, 201 OLIN LIBRARY CORNELL UNIVERSITY ITHACA, NY 14853, 26 September 2021 (2021-09-26), XP091046835
- TERRY RUDOLPH ET AL: "A relational quantum computer using only two-qubit total spin measurement and an initial supply of highly mixed single qubit states", ARXIV.ORG, CORNELL UNIVERSITY LIBRARY, 201 OLIN LIBRARY CORNELL UNIVERSITY ITHACA, NY 14853, 16 March 2005 (2005-03-16), XP080182829, DOI: 10.1088/1367-2630/7/1/228
- BROWNE DANIEL E ET AL: "Resource-efficient linear optical quantum computation INTRODUCTION", 9 February 2005 (2005-02-09), pages 1 - 5, XP055954684, Retrieved from the Internet <URL:https://arxiv.org/pdf/quant-ph/0405157.pdf> [retrieved on 20220824]
- STEPHEN P JORDAN: "Permutational Quantum Computing", ARXIV.ORG, CORNELL UNIVERSITY LIBRARY, 201 OLIN LIBRARY CORNELL UNIVERSITY ITHACA, NY 14853, 14 June 2009 (2009-06-14), XP080329151
- MICHAEL H FREEDMAN ET AL: "Symmetry Protected Quantum Computation", ARXIV.ORG, CORNELL UNIVERSITY LIBRARY, 201 OLIN LIBRARY CORNELL UNIVERSITY ITHACA, NY 14853, 26 September 2021 (2021-09-26), XP091046835

## Description

### BACKGROUND

A quantum computer is a physical machine configured to execute logical operations based on or influenced by quantum-mechanical phenomena. Such logical operations may include, for example, mathematical computation. Current interest in quantum-computer technology is motivated by analysis suggesting that the computational efficiency of an appropriately configured quantum computer may surpass that of any practicable non-quantum computer when applied to certain types of problems. Such problems include computer modeling of natural and synthetic quantum systems, integer factorization, data searching, and function optimization as applied to systems of linear equations and machine learning. Moreover, it has been predicted that continued miniaturization of conventional computer logic structures will ultimately lead to the development of nanoscale logic components that exhibit quantum effects, and must therefore be addressed according to quantum-computing principles.

A major obstacle to the practical realization of quantum computing is environmental noise, which rapidly decoheres unprotected quantum systems. A 'fault-tolerant' quantum computer endeavors to quell the computational effect of such noise, either by performing quantum error correction or by judicious engineering of the physical system on which the quantum computer is based. A quantum computer may be engineered to operate in a 'sweet spot', for instance, where at least one kind of noise is reduced. Topological protection has gained much recent attention, as it offers exponential reduction of environmental noise. Topological phases are difficult to realize and manipulate, however, so additional measures for protecting quantum information are desirable.

TERRY RUDOLPH ET AL: "A relational quantum computer using only two-qubit total spin measurement and an initial supply of highly mixed single qubit states",ARXIV.ORG, CORNELL UNIVERSITY LIBRARY, 201 OLIN LIBRARY CORNELL UNIVERSITY ITHACA, NY 14853, 16 March 2005 (2005-03-16), DOI: 10.1088/1367-2630/7/1/228 teaches universal quantum computation using only (i) the physically natural measurement on two qubits which distinguishes the singlet from the triplet subspace, and (ii) qubits prepared in almost any three different (potentially highly mixed) states.

### SUMMARY

The invention is defined by the independent claims. Preferred embodiments are defined by the dependent claims.

### BRIEF DESCRIPTION OF THE DRAWINGS

FIG. 1 shows aspects of an example quantum computer.
FIG. 2 illustrates a Bloch sphere, which graphically represents the quantum state of one qubit of a quantum computer.
FIG. 3 shows aspects of an example signal waveform for effecting a quantum-gate operation in a quantum computer.
FIG. 4 shows aspects of an example quantum-computation method.
FIG. 5 shows aspects of an example total spin-state measurement.
FIG. 6 shows aspects of an example classical computer system.

### DETAILED DESCRIPTION

### 1. Quantum-computer architecture

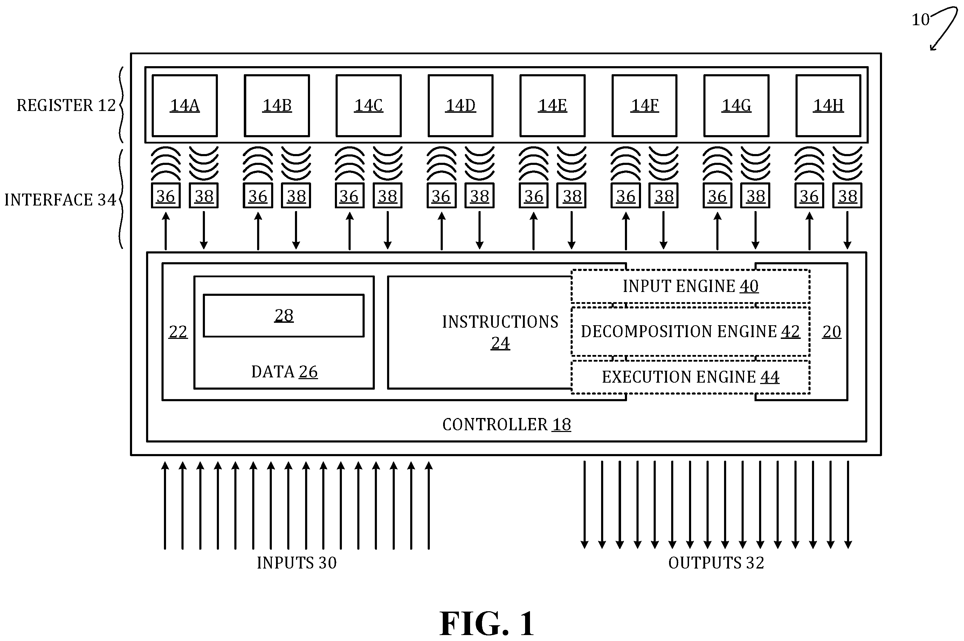

In order to provide a context for quantum computing, some aspects of a quantum-computer architecture will first be described. Turning now to the drawings, FIG. 1 shows aspects of an example quantum computer 10 configured to execute quantum-logic operations (*vide infra*). Whereas conventional computer memory holds digital data in an array of bits and enacts bit-wise logic operations, a quantum computer holds data in an array of qubits and operates quantum-mechanically on the qubits in order to implement the desired logic. Accordingly, quantum computer 10 of FIG. 1 includes at least one qubit register 12 comprising an array of qubits 14. The illustrated qubit register is eight qubits in length; qubit registers comprising longer and shorter qubit arrays are also envisaged, as are quantum computers comprising two or more qubit registers of any length.

Qubits 14 of qubit register 12 may take various forms, depending on the desired architecture of quantum computer 10. Each qubit may comprise: a superconducting Josephson junction, a trapped ion, a trapped atom coupled to a high-finesse cavity, an atom or molecule confined within a fullerene, an ion or neutral dopant atom confined within a host lattice, a quantum dot exhibiting discrete spatial- or spin-electronic states, electron holes in semiconductor junctions entrained via an electrostatic trap, a coupled quantum-wire pair, an atomic nucleus addressable by magnetic resonance, a free electron in helium, a molecular magnet, or a metal-like carbon nanosphere, as non-limiting examples. More generally, each qubit 14 may comprise any particle or system of particles that can exist in two or more discrete quantum states that can be measured and manipulated experimentally. For instance, a qubit may be implemented in the plural processing states corresponding to different modes of light propagation through linear optical elements (*e.g*., mirrors, beam splitters and phase shifters), as well as in states accumulated within a Bose-Einstein condensate.

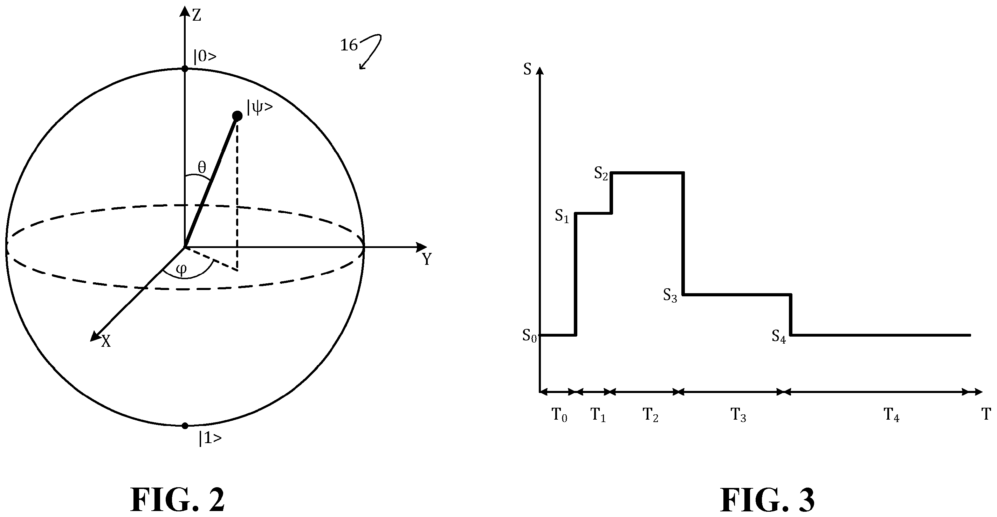

FIG. 2 is an illustration of a Bloch sphere 16, which provides a graphical description of some quantum mechanical aspects of an individual qubit 14. In this description, the north and south poles of the Bloch sphere correspond to the standard basis vectors |0〉 and |1〉, respectively-up and down spin states, for example, of an electron or other fermion. The set of points on the surface of the Bloch sphere comprise all possible pure states |*ψ*〉 of the qubit, while the interior points correspond to all possible mixed states. A mixed state of a given qubit may result from decoherence, which may occur because of undesirable coupling to external degrees of freedom.

Returning now to FIG. 1, quantum computer 10 includes a controller 18. The controller may include at least one processor 20 and associated computer memory 22. Processor 20 may be coupled operatively to peripheral componentry, such as network componentry, to enable the quantum computer to be operated remotely. Processor 20 may take the form of a central processing unit (CPU), a graphics processing unit (GPU), or the like. As such, controller 18 may comprise classical electronic componentry. The terms 'classical' and 'non-quantum' are applied herein to any component that can be modeled accurately as an ensemble of particles without considering the quantum state of any individual particle. Classical electronic components include integrated, microlithographed transistors, resistors, and capacitors, for example. Computer memory 22 may be configured to hold program instructions 24 that cause processor 20 to execute any function or process of controller 18. The computer memory may also be configured to hold additional data 26. In some examples, data 26 may include a register of classical control bits 28 that influence the operation of the quantum computer during run time-*e.g*., to provide classical control input to one or more quantum-gate operations. In examples in which qubit register 12 is a low-temperature or cryogenic device, controller 18 may include control componentry operable at low or cryogenic temperatures-*e.g*., a field-programmable gate array (FPGA) operated at 77K. In such examples, the low-temperature control componentry may be coupled operatively to interface componentry operable at normal temperatures.

Controller 18 of quantum computer 10 is configured to receive a plurality of inputs 30 and to provide a plurality of outputs 32. The inputs and outputs may each comprise digital and/or analog lines. At least some of the inputs and outputs may be data lines through which data is provided to and/or extracted from the quantum computer. Other inputs may comprise control lines via which the operation of the quantum computer may be adjusted or otherwise controlled.

Controller 18 is operatively coupled to qubit register 12 via quantum interface 34. The quantum interface is configured to exchange data bidirectionally with the controller. The quantum interface is further configured to exchange signal corresponding to the data bidirectionally with the qubit register. Depending on the architecture of quantum computer 10, such signal may include electrical, magnetic, and/or optical signal. Via signal conveyed through the quantum interface, the controller may interrogate and otherwise influence the quantum state held in the qubit register, as defined by the collective quantum state of the array of qubits 14. To this end, the quantum interface includes at least one modulator 36 and at least one demodulator 38, each coupled operatively to one or more qubits of the qubit register. Each modulator is configured to output a signal to the qubit register based on modulation data received from the controller. Each demodulator is configured to sense a signal from the qubit register and to output data to the controller based on the signal. The data received from the demodulator may, in some examples, be an estimate of an observable to the measurement of the quantum state held in the qubit register. Taken together, the controller, modulator, and demodulator may be referred to as a 'controller system'.

In some examples, suitably configured signal from modulator 36 may interact physically with one or more qubits 14 of qubit register 12 to trigger measurement of the quantum state held in one or more qubits. Demodulator 38 may then sense a resulting signal released by the one or more qubits pursuant to the measurement, and may furnish the data corresponding to the resulting signal to controller 18. Stated another way, the demodulator may be configured to output, based on the signal received, an estimate of one or more observables reflecting the quantum state of one or more qubits of the qubit register, and to furnish the estimate to the controller. In one non-limiting example, the modulator may provide, based on data from the controller, an appropriate voltage pulse or pulse train to an electrode of one or more qubits, to initiate a measurement. In short order, the demodulator may sense photon emission from the one or more qubits and may assert a corresponding digital voltage level on a quantum-interface line into the controller. Generally speaking, any measurement of a quantum-mechanical state is defined by the operator *O* corresponding to the observable to be measured; the result *R* of the measurement is guaranteed to be one of the allowed eigenvalues of *O*. In quantum computer 10, *R* is statistically related to the qubit-register state prior to the measurement, but is not uniquely determined by the qubit-register state.

Pursuant to appropriate input from controller 18, quantum interface 34 may be configured to implement one or more quantum-logic gates to operate on the quantum state held in qubit register 12. Whereas the function of each type of logic gate of a classical computer system is described according to a corresponding truth table, the function of each type of quantum gate is described by a corresponding operator matrix. The operator matrix operates on (*i.e*., multiplies) the complex vector representing the qubit register state and effects a specified rotation of that vector in Hilbert space.

For example, the Hadamard gate H is defined by $H = \frac{1}{\sqrt{2}} \left[\begin{matrix}1 & 1 \\ 1 & - 1\end{matrix}\right] .$ (1.1) The H gate acts on a single qubit; it maps the basis state |0〉 to $\left(\left|0\right〉+\left|1\right〉\right) / \sqrt{2}$, and maps 11) to $\left(\left|0\right〉-\left|1\right〉\right) / \sqrt{2}$. Accordingly, the H gate creates a superposition of states that, when measured, have equal probability of revealing |0〉 or |1〉.

The phase gate *S* is defined by $S = \left[\begin{matrix}1 & 0 \\ 0 & {e}^{iπ / 2}\end{matrix}\right] .$ (1.2) The *S* gate leaves the basis state |0〉 unchanged but maps |1〉 to *e*^{*i*π/2} |1〉. Accordingly, the probability of measuring either |0〉 or |1〉 is unchanged by this gate, but the phase of the quantum state of the qubit is shifted. This is equivalent to rotating *ψ* by 90 degrees along a circle of latitude on the Bloch sphere of FIG. 2.

Some quantum gates operate on two or more qubits. The SWAP gate, for example, acts on two distinct qubits and swaps their values. This gate is defined by $SWAP = \left[\begin{matrix}1 & 0 & 0 & 0 \\ 0 & 0 & 1 & 0 \\ 0 & 1 & 0 & 0 \\ 0 & 0 & 0 & 1\end{matrix}\right] .$ (1.3)

The foregoing list of quantum gates and associated operator matrices is non-exhaustive, but is provided for ease of illustration. Other quantum gates include *Pauli - X, -Y,* and -*Z* gates, the $\sqrt{NOT}$ gate, additional phase-shift gates, the $\sqrt{SWAP}$ gate, controlled *cX, cY,* and *cZ* gates, and the Toffoli, Fredkin, Ising, and Deutsch gates, as non-limiting examples.

A 'Clifford gate' is a quantum gate that belongs to the Clifford group-*viz*., a set of quantum gates that effect permutations of the Pauli operators. For the *n*-qubit case the Pauli operators form a group ${P}_{n} = \left\{{e}^{iθπ / 2}{σ}_{j 1}⊗⋯⊗{σ}_{jn}\left|θ=0,1,2,3,{j}_{k}=0,1,2,3\right.\right\} ,$ (1.4) where *σ*₀, ...*σ*₃ are the single-qubit Pauli matrices. The Clifford group is then defined as the group of unitaries that normalize the Pauli group, ${C}_{n} = \left\{V∈{U}_{{2}^{n}}\left|{VP}_{n}{V}^{†}={P}_{n}\right.\right\} .$ (1.5)

Continuing in FIG. 1, suitably configured signal from modulators 36 of quantum interface 34 may interact physically with one or more qubits 14 of qubit register 12 so as to assert any desired quantum-gate operation. As noted above, the desired quantum-gate operations are specifically defined rotations of a complex vector representing the qubit register state. In some examples, in order to effect a desired rotation *O*, one or more modulators of quantum interface 34 may apply a predetermined signal level *Sᵢ* for a predetermined duration *Tᵢ*. In some examples, plural signal levels may be applied for plural sequenced or otherwise associated durations, as shown in FIG. 3, to assert a quantum-gate operation on one or more qubits of the qubit register. In general, each signal level *Sᵢ* and each duration *Tᵢ* is a control parameter adjustable by appropriate programming of controller 18.

The terms 'oracle' and 'quantum algorithm' are used herein to describe a predetermined sequence of elementary quantum-gate and/or measurement operations executable by quantum computer 10. An oracle may be used to transform the quantum state of qubit register 12 to effect a classical or non-elementary quantum-gate operation or to apply a density operator, for example. In some examples, an oracle may be used to enact a predefined 'black-box' operation *f*(*x*)*,* which may be incorporated in a complex sequence of operations. To ensure adjoint operation, an oracle mapping *n* input qubits |*x*〉 to *m* output or ancilla qubits |*y* = *f*(*x*)〉 may be defined as a quantum gate *O*(|*x*〉 ⊗ |*y*〉) operating on the (*n + m*) qubits. In this case, *O* may be configured to pass the *n* input qubits unchanged but combine the result of the operation *f*(*x*) with the ancillary qubits via an XOR operation, such that *O*(|*x*〉 ⊗ |*y*〉) = |*x*〉 ⊗ |*y* ⊗ *f*(*x*)〉*.*

Implicit in the description herein is that each qubit 14 of qubit register 12 may be interrogated via quantum interface 34 so as to reveal with confidence the standard basis vector |0〉 or |1〉 that characterizes the quantum state of that qubit. In some implementations, however, measurement of the quantum state of a physical qubit may be subject to error. Accordingly, any qubit 14 may be implemented as a logical qubit, which includes a grouping of physical qubits measured according to an error-correcting oracle that reveals the quantum state of the logical qubit with above-threshold confidence.

### 2. Overview of symmetry-protected quantum computation

This disclosure presents a model of quantum computation using qubits, where it is possible to measure whether a given pair of qubits are in a singlet (total spin 0) or triplet (total spin 1) state. The model is called 'singlet-triplet projection polynomial-time computation' (STP). In the STP model, measurement is enacted so as not to reveal other information-*e.g*., individual spin orientations or a full decomposition into Bell states. Provided that all of the terms in the environmental Hamiltonian are *SU*(2)-invariant, measurement into total spin states is protected. It is reasonable to suppose that the STP model herein is equivalent to bounded quantum-error polynomial time (BQP). However, the model provides significant computational power irrespective of whether such equivalence can be demonstrated generally. As a partial demonstration, it is shown herein that: (1) the model is capable of universal quantum computation with polylogarithmic overhead if supplemented by single-qubit *X* and *Z* gates; (2) that without any additional gates, the model is at least as powerful as the weak model of 'permutational quantum computation' of Jordan [Ref. 1]; and (3) that with postselection, the model is equivalent to PostBQP.

As noted hereinabove, imperfect physical gates are a major challenge for building a scalable quantum computer. One possible way to overcome this challenge is to use error correction codes to build high-fidelity logical gates from lower-fidelity physical gates [Ref. 2]. Another approach is to use a topologically ordered state to store and manipulate quantum information, directly obtaining good logical gates [Ref. 3]. Proposed herein is a third approach-to protect useful quantum operations in view of the symmetry of the physical Hamiltonian of the system embodied in the qubit register.

This disclosure shows how selected, classically difficult quantum computations can be carried out by the simplest symmetry-protected measurement, and how all quantum computation, the class BQP, can be simulated using such measurement together with single-qubit primitives. The 'symmetry' herein is 3-dimensional rotational symmetry *i.e., SU*(2) symmetry. The symmetry-protected measurement referenced above is an orthogonal projection into the singlet or triplet state of two spin ½ particles (or two copies of any other 2-dimensional quantum-mechanical system).

A 2-dimensional degree of freedom (DOF) is generally called a 'qubit'. When a pair of qubits is acted on by *SU*(2) through its fundamental representation on ${ℂ}^{2}$, their tensor-squared representation decomposes into the sum of a 1-dimensional singlet (spin-0 subspace) and a 3-dimensional triplet (spin-1 subspace). The operation, projective measurement of spin obeying the Von Neuman axioms of quantum mechanics, is the symmetry-protected operation at the center of this disclosure. This measurement is protected in the sense that it commutes with all *SU*(2)-invariant terms in the system Hamiltonian. Non-rotationally symmetric environmental noise can still decohere the projected states, so *SU*(2) symmetry protection is not a panacea for all noise sources. It can be a valuable tool, however, as *SU*(2)-averaged noise is quite common (as in [Ref. 4], for instance). Moreover, even topological protection, may expose unguarded sectors-*e.g*., quasi-particle poisoning of Majorana systems.

This disclosure describes simulation of the 'weak Jordan model' [Ref. 1] and of higher *SU*(2) spin projections based solely on a total spin-state measurement. Jordan builds two measurement-based models of 'permutational computation' based on three primitives: (1) engineer a spin state of many spin ½ particles as described by the eigenvalues of some complete set-*i.e*., a tree-of commuting spin measurements; (2) permute the spins; and (3) read out the approximate expected-value eigenvalues of a second tree of commuting spin measurements. The model has a strong form involving amplitudes (as opposed to probabilities), but the weak form is used here. Despite the name, considerable evidence is adduced that even the 'weak' model extends classical computation. This disclosure shows that the weak model is efficiently simulable by a total spin-state measurement. Second and closely related, an efficient procedure is outlined for simulating measurements of large groups of particles into higher (than 0 and 1) spin sectors using only the ability of the total spin-state measurement to distinguish the spin 0 and spin 1 states of two spin ½ particles.

The model herein fits into the broad category of 'measurement only', as unitaries are not used, but instead quantum information is processed through projective measurements. It also demonstrates that a singlet-triplet (*s*/*t*) measurement, augmented by unprotected single-qubit operations Clifford *X* and Clifford *Z*, is BQP-complete. Thus it provides an efficient (though not optimized) universal quantum computer from those three operations. It will be noted that single-qubit operations, particularly the 'Pauli' operations, are less prone to error that 2-qubit operations, so conferring *SU(2)* protection on the 2-qubit operation is an advantage.

It is know that measurement of two qubits into the four Bell states (while usefully facilitating quantum teleportation, for instance) does not extend the power of Clifford operations beyond the purely classical realm. Surprisingly, however, the less refined, less revealing total spin-state measurement, which lumps three of the Bell states into one bucket, is computationally more powerful. For additional context, it is also shown that PostSTP=PostBQP. That is, in the presence of physically unrealistic post selection, predicate total spin-state measurement and BQP are the same. This is a theoretical indication of the same computational power implemented concretely in this disclosure.

Considered particularly herein are qubits encoded in quantum spins, where it is assumed that the Hamiltonian and any noise terms at least approximately respect an *SU*(2) symmetry acting on all the qubits simultaneously. In an idealized case, a single qubit is not subject to noise of any kind, since there are no terms one can write down that are invariant under *SU*(2) on that qubit. But when a pair of qubits is brought together, the total spin (either 0 or 1) is the only *SU*(2)-invariant term on both qubits. Thus, dephasing may happen between spin 0 (singlet) and spin 1 (triplet) states; it also becomes possible, however, to *measure* this total spin.

The focus in this disclosure is on the power of these singlet/triplet measurements in an idealized model. To state the model: it is assumed that there are *n* qubits for some *n*, initially in some state, which is a tensor product of singlets. Arbitrary pairs of qubits may now be selected, and the total spin of the two selected qubits may now be determined, according to the rules of quantum mechanics, by a projective measurement. To that end, polynomially many rounds of measurement may be enacted. The notation *s*/*t* is used herein to indicate this operation, which projectively measures a pair of qubits to be in a singlet (*s*) or triplet (*t*) state. The disclosed model may also be referred to as *s*/*t*, or more completely as STP (singlet-triplet projection polynomial-time computation), indicating that polynomially many rounds of *s*/*t* measurements may be carried out. Between consecutive rounds, polynomially long classical computations-*e.g*., employing previous *s*/*t* outcomes-are permitted, in order to select the next pair to be measured.

Perhaps the 'smallest' physical example where this can be realized is a single electron and a single proton far separated from each other. Each particle has spin ½, and, assuming no magnetic fields are present and that spin-orbit coupling can be ignored (which depends on the electric fields and the orbital degrees of freedom), then these spins are not subject to any decoherence. If the electron and proton are brought near to each other, then there is a hyperfine coupling between their spins, and the ground state splits into singlet and triplet levels with slightly different energies that can in principle be measured. It is conceivable, then, to try to compute by having a large number of electrons and protons and occasionally bringing a single electron near a single proton and measuring the total spin. This simple example is slightly different from the idealized model above, as some of the qubits are associated with electrons and some with protons, and the pairs must have one electron and one proton. More realistic examples include (a) trapped ions where the interaction between the ions may dependent on total spin; or (b) spin blockade implemented in quantum dots [Ref. 5].

This disclosure addresses the question: what is the computational power of STP? As noted above, STP may be equivalent to BQP. While that remains unproven, various intermediate results herein support the equivalency. It is to be understood that the kind of symmetry-protection implemented herein is distinct from approaches using measurement-based quantum computation in a symmetry-protected topological phase (SPT) [Ref. 6]. In the balance of this disclosure, Section 3 shows how to implement universality using *s*/*t* as well as certain single-qubit Cliffords and/or Pauli measurements. The discussion is in reverse order in the number of single-qubit operations employed: addressed first is the full single-qubit Clifford group and all Pauli measurements; the number of single-qubit operations required is then reduced in stages. Section 4 shows that STP is at least as powerful as the 'weak permutational computing' model of [Ref. 1]. Section 5, presents generalizations of STP, showing that allowing higher spin qudits does not increase the power of the model. Section 6 defines a postselected version of *s*/*t* and shows that it is equivalent to PostBQP, and Section 7 describes an implementation of the foregoing principles in a quantum-computing method. In addition to whether STP is equivalent to BQP, another question is the hardness of sampling-measurement outcomes for some sequence of *s*/*t* measurements, with the sequence randomly chosen or chosen in some other way. Accordingly, another result of independent interest is given in Section 8-namely a relation between the 'irrationality measure' of an irrational angle and how many times one may need to rotate by that angle to approximate some desired target angle to some desired accuracy.

### 3. {X, Z, and s/t} is universal for quantum computation

The following lemma is now proved. (Lemma 1) Using *s*/*t* measurements and single-qubit *X, Z* unitaries, a gate set consisting of one- and two-qubit Clifford operations and Pauli measurements, as well as *T* gates, is approximated with an overhead that is only polylogarithmic in the error.

*3.1. s*/*t and Single-qubit Clifford and Pauli measurement is universal for quantum computing.* It is shown that *s*/*t* on arbitrary pairs of qubits, combined with arbitrary Clifford gates on a single qubit (*i.e., X, Z, H, S*) and single-qubit Pauli measurements, is universal for quantum computing. In particular, a gate set consisting of one- and two qubit Clifford operations and Pauli measurements, as well as *T* gates, is approximated with an overhead that is only polylogarithmic in the error. In subsequent sections, the number of required single-qubit operations is reduced, at a cost of making the construction more complicated. First it is shown that the full Clifford group can be implemented, and then universality is demonstrated.

*3.1.1. Implementing the full Clifford group.* First, note that one can implement a four outcome projective measurement on two qubits *A, B* in a Bell basis: $\frac{1}{\sqrt{2}} \left(\left|01\right〉-\left|10\right〉\right) ; \frac{1}{\sqrt{2}} \left(\left|01\right〉+\left|10\right〉\right) ; \frac{1}{\sqrt{2}} \left(\left|00\right〉+\left|11\right〉\right) ; \frac{1}{\sqrt{2}} \left(\left|00\right〉-\left|11\right〉\right) .$ (3.1) To do this, first apply an *s*/*t* measurement. If the outcome is s, then the qubits are in the first Bell state. If the outcome is *t*, apply *Z_{A}* and again measure *s*/*t*. If the outcome is s, then the qubits were in the second Bell state. If the outcome is *t*, apply *X_{A}* and again measure *s*/*t*; if the outcome is s, then the qubits were in the third Bell state. If the outcome is t, then the qubits were in the fourth Bell state.

In light of the fact that Bell-basis measurements can be implemented, teleportation is also possible. Given a pair of qubits labeled *B, C* in a Bell state, one can bring in an additional qubit labeled *A* and measure *A, B* in the Bell basis. This action teleports the state of *A* to *C*, up to some correction on *C* which is a single-qubit Clifford.

It is also possible to teleport more than one qubit and to use that ability to perform Clifford operations, if one can prepare appropriately entangled states. In particular, consider a state *ψ_{CNOT}* on four qubits *C, D, E, F* obtained by taking *C, E* in a singlet and *D, F* in a singlet, and then applying a CNOT from *E* to *F*. Now bring in two extra qubits *A*, *B*, measure *A, C* in the Bell basis, and measure *B, D* in a Bell basis. This procedure teleports the state of *A, B* to *E, F* and then applies a CNOT, again up to some single-qubit Cliffords on *E, F.*

If one can prepare the state *ψ_{CNOT},* then it is possible to perform CNOT operations. Combined with the ability to perform single-qubit Clifford operations, that ability affords the full Clifford group. It is also possible to prepare *ψ_{CNOT}* using just *s*/*t* and single-qubit Cliffords, as will now be shown. First one constructs an operation *O_{ZZ}* on a pair of qubits *A, B,* which projectively measures *Z_{A}Z_{B},* and, if *Z_{A}Z_{B}* = -1 then it also measures *X_{A}X_{B}.* To do this, simply perform only the first two measurements of the protocol above to measure in the Bell basis: if either of the first two measurements is *s*, then *Z_{A}Z_{B}* = -1, and now *X_{A}X_{B}* has also been measured. If both measurements are *t*, then *Z_{A}Z_{B}* = +1 but no other information is revealed; one may then apply *Z_{A}* to undo the first application of *Z_{A}.*

Using the operation *O_{ZZ}*, it is possible also to produce an operation *Ô_{ZZ}* which always measures *Z_{A}Z_{B}* and, with probability ½, also measures *X_{A}X_{B}.* To do so, flip an unbiased coin: if heads, apply *O_{ZZ}*. If tails, apply *X_{A}* and then apply *O_{ZZ}*, then apply *X_{A}* again. Then, if *Z_{A}Z_{B} =* 1 measure *X_{A}X_{B}* if the coin is tails but not if it is heads, whereas if *Z_{A}Z_{B}* = -1, one measures *X_{A}X_{B}* if the coin is heads but not if it is tails.

Similarly, one can produce an operation *O_{XX}* that measures *X_{A}X_{B}* and, if *X_{A}X_{B}* = -1, also measures *Z_{A}Z_{B}.* Further, one can produce an operation *Ô_{XX}* that measures *X_{A}X_{B}* and, with probability ½ measures *Z_{A}Z_{B},* otherwise measuring nothing else. To construct *O_{XX},* use the same construction as *O_{ZZ}* except apply *X_{A}* after the first measurement if the result is *t*, rather than applying *Z_{A}*. The operation *Ô_{XX}* is constructed similarly. Also (as in Section 3.2.2, *vide supra*) one can produce operations *O_{YY}* and *Ô_{YY}.* To construct *O_{YY}, Ô_{YY},* apply *Y_{A}* = *X_{A}Z_{A}* (up to scalar phase) after the first measurement if it is t.

*O_{ZZ}*, *Ô_{ZZ} succeed* if they measure only *Z_{A}Z_{B}* without measuring additional information. Similarly, *O_{XX}, Ô_{XX}* (respectively, *O_{YY}, Ô_{YY}*) *succeed* if they measure only *X_{A}X_{B}* (respectively, *Y_{A}Y_{B}*) without revealing any additional information.

A CNOT gate may be produced using an ancilla, given the ability to perform single-qubit Clifford operations and Pauli measurements, as well as to measure *ZZ* on an arbitrary pair of qubits and to measure *XX* on an arbitrary pair of qubits. The circuit [Ref. 7] [Ref. 8] is: prepare the ancilla in the |+〉 state, measure *ZZ* on the source and ancilla, measure *XX* on the ancilla and target, and finally measure *Z* on the ancilla, and apply single-qubit Clifford corrections if needed. The original reference [Ref. 7] writes the circuit with additional Hadamard gates so that all measurements are *Z* or *ZZ*, but it conjugates to the circuit given here.

The state *ψ_{CNOT}* may now be produced via a probabilistic protocol: prepare two entangled qubits; then attempt to produce a CNOT gate by using operations *O_{ZZ}* and *O_{XX}* in place of the *ZZ* and *XX* measurements in the protocol for a CNOT. If both *O_{ZZ}* and *O_{XX}* succeed, then the desired *ψ_{CNOT}* has been produced. If not, then the procedure may be attempted again. Note that in this probabilistic protocol, indeed *O_{ZZ}* and *O_{XX}* will each succeed with probability ½, without any need to use *Ô_{ZZ}* and *Ô_{XX}.* Accordingly, this protocol to perform a CNOT gate can be understood simply as, first, there is a protocol that sometimes succeeds in performing the desired CNOT, and, second, by preparing entangled states 'offline' and teleporting through them, one can use it to perform CNOTs on data qubits by 'only using the CNOT when it will succeed'.

*3.1.2. Universality.* Universality will now be shown. The construction here is *not* intended to be optimal in terms of minimizing overhead in any way. It is merely intended to demonstrate universality by leveraging the results herein. Shown first is a procedure to prepare (offline) a non-stabilizer pure state on a single qubit. Prepare two qubits in states |0〉 and |+〉 using *Z, X* measurements and applying *X, Z* if the wrong outcome occurs. Project into the triplet state (if instead they are in a singlet, re-prepare and try again). The result is, up to normalization, $\left|00\right〉 + \frac{1}{2} \left(\left|01\right〉+\left|10\right〉>\right)$. Now measure the second qubit in the *X* basis; it is assumed without loss of generality that the result is |+〉. The result state on the first qubit is, up to normalization, 3|0〉 + |1〉. With normalization this is cos(*θ*)|0〉〉 + sin(*θ*)|1〉, where *θ* = arctan(1/3) is an irrational angle [Ref. 9]. Any such state cos(*θ*)|0〉〉 + sin(*θ*)|1〉 is equal to exp(*iθY*)|0〉. Using this as a resource for state injection produces a rotation by $exp \left(\pm iθY\right) ,$ (3.2) where the sign is chosen uniformly at random (the basis for state injection is a little different from the standard one since rotation is by *Y* instead of by *Z*).

In the simplest applications of state injection, one imagines a situation where rotation by twice the angle is available as a primitive (for example, using state injection to produce *T* gates and assume that one has *S* gates available). In that case, if the sign is not what is desired, it is possible to recover with a rotation by twice the angle. That option is not available in the present derivation, so a different approach is employed. Pick any desired target angle *ϕ_{target},* and any error *ε* > 0. Then, repeatedly apply state injection to a qubit initialized in the |0〉 state, until the result is cos(*ϕ*)|0〉〉 + sin(*ϕ*)|1〉 with $ϕ - {ϕ}_{target} \left|\leq ϵ.\right.$ (3.3) Here, when state injection is applied it is irrelevant whether the plus sign or the minus sign is chosen. The result is a random walk in angles, and, since *θ* is irrational in expected time *O*(1), $\left|ϕ-{ϕ}_{target}\right| \leq ϵ .$ (3.4)

Choosing then *ϕ_{target}* = *π*/8, one can then produce states arbitrarily close to a magic state for a rotation by *π*/8, i.e., a magic state for a '*T*' gate, where the quotes are because this is rotation by *Y* rather than *Z*. Choosing *ε* sufficiently small, one can then use this gate as input into any standard *T* gate distillation protocol [Ref. 10] to obtain universality with only polylogarithmic overhead in the target error.

*3.2. Reducing the single-qubit operations needed.* The range of required single-qubit operations is now reduced, starting with Hadamard and *S* gates.

*3.2.1. Avoiding use of Hadamard and S gates.* It is possible to avoid using both Hadamard and *S* gates. Without these gates, the construction of Section 3.1.1 gives the subgroup of the Clifford group generated by single-qubit *X* and *Z* and two qubit CNOT. Call this subgroup *C*. As shown below, the full Clifford group is generated using just *s*/*t*, *X, Z* and single-qubit Pauli measurements.

As single-qubit Paulis are readily measured, qubits in state *Y* = +1 may be prepared. Using these *Y* = +1 qubits as a target for state injection for rotations by *Z*, the $S = exp \left(i\frac{π}{2}Z\right)$ gate is produced. This state injection protocol requires only *X, Z,* CNOT gates, and single-qubit Pauli measurements, so it requires only the subgroup *C* above. As the single qubit *Z* = *S*² is available, it is possible to recover state injection if *S*^{†} is instead produced.

One can also use the same *Y* = +1 state in state injection to produce rotation by $exp \left(i\frac{π}{2}X\right)$. This may be done according to the usual state injection protocol, except that the control and target on the CNOT gate in state injection are interchanged and the final *Z* measurement in state injection is replaced by an *X* measurement. The effect of this is to perform state injection in a Hadamard basis (even though no Hadamards are used), as (*H* ⊗ *H*)CNOT(*H* ⊗ *H*) is equal to a CNOT gate with control and target interchanged. Combining these rotations $exp \left(i\frac{π}{2}Z\right) , exp \left(i\frac{π}{2}X\right)$, the full single-qubit Clifford group, including *H*, is obtained.

*3.2.2. X, Z and s*/*t is universal.* Single-qubit Pauli measurements may now be eliminated. Recall that using just *X, Z* and *s*/*t* provides a protocol *Ô_{ZZ}* that measures *ZZ* on any two qubits *A, B* and measures nothing else with probability ½. Given a set *S* of qubits such that the product *ZZ* = +1 for all pairs of qubits in *S*, consider another qubit *q* in any state. Then pick any qubit *r* from *S* and measure *Z_{q}Zᵣ.* With probability ½ nothing else is measured and if *Z_{q}Zᵣ* = +1, add *q* to the set. If *Z_{q}Zᵣ* = -1, apply *X* to *q* and then add *q* to the set. On the other hand, with probability ½, additional information is measured; in that case, remove *r* from *S*.

Thus, with probability ½, |*S*| → |*S* + 1|; and with probability ½, |*S*| → |*S* - 1|. This fact enables the assembly of large sets *S*. Since the size of *S* does an unbiased random walk, it takes ~ *n*² operation to produce a set *S* with |*S*| = *n*. Such a set may now be defined as a 'standard': throw out any qubit in *S*. The remaining qubits are then in a state which is an incoherent mixture of |0〉^{⊗(*n*-1)} and |1〉^{⊗(*n*-1)}.

The two cases, where the remaining qubits are either in |0〉^{⊗(*n*-1)} or |1〉^{⊗(*n*-1)}, are now analyzed separately. First suppose that the state is |0〉^{⊗(*n*-1)}. Call each of these *n* - 1 qubits *'Z* standards'. Then, any time *Z* is to be measured on a single qubit, get a *Z* standard and use *O_{ZZ}* to measure *ZZ* on the given qubit and the standard. If one measures no information other than *ZZ,* one can now use both qubits as standards. If one also measures *XX,* then both qubits are discarded. Accordingly, at most one *Z* standard is consumed per measurement. Even if *O_{ZZ}* does not succeed, so that *XX* is also measured, the value of *Z* on the given qubit has still been learned: the effect is to measure the value of *Z* on the given qubit and then bring that qubit and the standard into a Bell pair.

It is assumed above that the standards were in the state |0〉^{⊗(*n*-1)}. If instead they are in the state |1〉^{⊗(*n*-1)}, nothing changes: labels |0〉 and |1〉 are arbitrary and can be interchanged. This is a consequence of a symmetry of operations *X, Z, s*/*t,* which are invariant (up to an unobservable phase) under conjugation by *X*. Indeed, if the labels were not arbitrary, then some sequence would reveal the difference between these two states, in which case one could, assuming a value for |1〉^{⊗(*n*-1)}, apply *X* to every qubit to obtain |0〉^{⊗(*n*-1)}.

Accordingly, one can measure single-qubit *Z* with a quadratic overhead: the number of operations is proportional to the square of the number of measurements. Similarly, one can measure single-qubit *X* and single-qubit *Y* by preparing *X* standards (respectively, *Y* standards), which are sets of qubits where *XX* = +1 (respectively, *YY =* +1) for every pair in the set. Further, this quadratic overhead can easily be reduced to linear. Given some such set *S*, in *O*(1) operations one can prepare another set *T* with |*T*| ≥ 2 such that all pairs of qubits in *T* also have *ZZ* = +1. Pick one qubit from *S* and one from *T* and apply *Ô_{ZZ}.* If that succeeds with *ZZ* = +1, add *all* qubits from *T* to *S* and if it succeeds with *ZZ* = -1, apply *X* to all qubits in *T* and then add all qubits in *T* to *S*. If it fails, remove the given qubit from *S* and discard *T*. Thus, with probability ½, |*S*| → |*S*| + |*T*| ≥ |*S*| + 2; and with probability ½, |*S*| → |*S*| - 1.

This gives a biased random walk in |*S*| and so |*S*| increases linearly in the number of operations with high probability. It is possible to optimize the linear increase. For example, what is the best |*T*| to use; should one in fact apply this construction recursively by constructing *T* using a similar process? One can in fact avoid discarding all of *T* but only discard the measured qubit if *Ô_{ZZ}* does not succeed, and so on.

### 4. Permutational quantum computation

The model of permutational quantum computing [Ref. 1] is as follows. For any binary tree *T* with *n* leaves, a set of commuting operators on a system of *n* qubits is defined. Each qubit corresponds to one leaf. For every vertex, there is an operator with eigenvalues corresponding to the total spin of the qubits corresponding to leaves which are descendants of that vertex. Additionally, for the root, there is an operator with eigenvalues corresponding to the total spin in the *Z*-direction of the qubits, denoted *S_{Z}*. The eigenvalues of these operators define a complete eigenbasis.

There are two models of permutational quantum computing. In the strong model, one can prepare any state corresponding to any tree *T* and to any given choice of eigenvalues of the corresponding operators for tree *T*. One can then permute the particles and choose any other tree *S*, and measure the inner product onto any state corresponding to any desired tree *S* and any desired choice of eigenvalues of operators for tree *S* up to inverse polynomial accuracy. In the weak model, one can only measure the absolute value of the inner product between states up to inverse polynomial accuracy, without getting information on the phase.

It is shown here that: (Lemma 2) Using just *s*/*t*, one can simulate the weak model in polynomial time.

*S, T, . . .* is used herein to denote unlabeled binary trees. *λ*, *λ'*, ... is used to denote labeled binary trees, and |*λ*〉, . . . is used to denote the corresponding states. Note that the inverse polynomial accuracy in the weak model can be achieved in polynomial time if one can do the following. First prepare any |*λ*〉 in polynomial time. Second, projectively measure the operators corresponding to some tree *T* (where *T* is *λ'* without the labels). Repeating this polynomially many times gives the desired approximation.

Next note that it suffices to consider the case that the root has spin 0. Indeed, consider any *λ*, *λ'* such that *λ* has spin *Sᵣₒₒₜ* ≠ 0. Let |*λ, S_{Z}*〉 be a state defined by some labeled tree *λ* with the *Z*-spin at root replaced by *S_{Z}*. Then, $\left〈λ′,{S}_{Z}^{′}\left|λ, {S}_{Z}\right.\right〉 = 0$ unless ${S}_{root} = {S}_{root}^{′}$ and ${S}_{Z} = {S}_{Z}^{′}$. To compute |〈*λ*|*λ'*〉|² if it is nonzero, do the following. Adjoin an additional 2*Sᵣₒₒₜ* ancilla qubits, defining some tree *λ"* which constrains those ancillas to be in the spin *Sᵣₒₒₜ* state. Then join the root of *λ* to the root of *λ"* to produce some *λ̂* with spin *Ŝᵣₒₒₜ* = 0. Similarly, join the root of *λ'* to another copy of *λ"* to produce some *λ'̂*, with ${\hat{S}}_{root}^{′} = 0$. Then, compute the inner product |〈*λ̂*|*λ̂'*〉|², which is equal to |〈*λ*|*λ'*〉|², as $\left.\hat{λ}\right〉 = {\sum }_{{S}_{Z} = - {S}_{root}}^{+ {S}_{root}} A \left({S}_{Z}\right) \left|λ, {S}_{Z}\right〉 ⊗ \left|λ",-{S}_{Z}\right〉 ,$ (4.1) where *A*(*S_{Z}*) are some Clebsch-Gordan coefficients. Do the same expansion for |*λ̂'*〉 and then $\left〈\hat{λ}′\left|\hat{λ}\right.\right〉 = {\sum }_{{S}_{Z} = - {S}_{root}}^{+ {S}_{root}} {\left|A\left({S}_{Z}\right)\right|}^{2} \left〈λ′,{S}_{Z}\left|λ, {S}_{Z}\right.\right〉 .$ (4.2) Since the inner product on the right-hand side is independent of *S_{Z},* the result follows. The independence may be shown as follows. Let (in a slight overuse of notation) *X* denote the sum of Pauli *X* operators on all qubits. The state exp(*iθX*)|*λ*, *S_{Z}* = *Sᵣₒₒₜ*〉 is a superposition of states |*λ*, *S_{Z}*〉 with different *S_{Z}*. The inner product $\left(\left〈λ′,{S}_{root}\right|exp\left(-iθX\right)\right) \left(exp\left(iθX\right)\left|λ, {S}_{root}\right〉\right)$ (4.3) is independent of *θ*, and by expanding in *θ* it follows that 〈*λ'*, *S_{Z}*|*λ, S_{Z}*〉 is independent of the particular *S_{Z}*.

Described next is a procedure to projectively measure operators corresponding to any tree *T* with root having total spin 0. The key is that given any set *U* of qubits with |*U*| = *M* for some *M*, the total spin of those qubits is measured approximately as follows. Repeat the following operation many times: choose a random pair of qubits, and measure *s*/*t.* The number of measurements needed is at most inverse polynomial in the accuracy, as shown below.

Then, letting *S*² denote the squared spin, and *S̅ᵢ* denote a vector of spin operators (one-half the Pauli operators) on qubit *i*, $\begin{matrix}{S}^{2} & = {\sum }_{i = 1}^{M} {\sum }_{j = 1}^{M} {\vec{S}}_{i} ⋅ {\vec{S}}_{j} & \left(4.4\right) \\ & = \frac{3}{4} M + {\sum }_{i \neq j} {\vec{S}}_{i} ⋅ {\vec{S}}_{j} & \left(4.5\right) \\ & = \frac{3}{4} M + M \left(M-1\right) \frac{{\sum }_{i \neq j} {\vec{S}}_{i} ⋅ {\vec{S}}_{j}}{M \left(M-1\right)} . & \left(4.6\right)\end{matrix}$ Hence, averaging over randomly selected *i*, *j*, the expectation value of *S̅ᵢ · S̅ⱼ* equals $\left({S}^{2}-\frac{3}{4}M\right) / \left(M\left(M-1\right)\right)$ . In a triplet state, *S̅ᵢ · S̅ⱼ* = 1/4 while in a singlet it equals -3/4. So, the probability of triplet is $\left({S}^{2}-\frac{3}{4}M\right) / \left(M\left(M-1\right)\right) + 3 / 4 .$ (4.7)

Note that while this measurement of singlet or triplet may change the state of the qubits in *U,* it does not change the total spin and since *i*, *j* is chosen randomly each time, the probability of triplet depends only on the total spin. Hence, since the measurements are independent, one may estimate the spin in a time which is inverse polynomial in the accuracy. Indeed, since the spin is quantized, the convergence is actually faster than polynomial. Once the number of measurements is polynomially large compared to *S²,* the convergence in accuracy becomes exponential.

Using this ability to measure total spin of a set of particles as a primitive, one can measure the operators corresponding to any tree *T*. The key is to start at the leaves and work towards the root. Measure operators corresponding first to vertices closest to the leaves. Proceed toward the root, only measuring an operator on a given vertex once all operators below that vertex have been measured. While the operators corresponding to different vertices commute with each other, the measurement process reveals extra information. The measurement process need not commute for different vertices. However, the measurement process for a given vertex does not affect the total spin on vertices closer to the root.

Explained next is how to prepare a state |*λ*〉 in polynomial expected time. In this case, one proceeds in the reverse direction, starting at the root and working towards the leaves. Prepared now is a sequence of states |*λ*₀〉, |*λ*₁〉,.... This corresponds to a sequence of *partially labeled* trees *λ*₀, *λ*₁,.... In a partially labeled tree, some set of vertices will have labels, and if a vertex *v* is labeled, then all vertices which are ancestors of *v* will also be labeled. The partially labeled tree *λ*₀ will have the root labeled with *Sᵣₒₒₜ* = 0 and no other labels. Each tree *λ*_{*i*+1} will have two more vertices labeled than the previous tree *λᵢ* in the sequence; this will be done by labeling a pair of vertices which are children of some vertex *vᵢ* which is labeled in *λᵢ*, and the last tree in the sequence will have all vertices labeled and will be the same as *λ*. Each state |*λᵢ*〉 corresponding to some partially labeled tree *λᵢ* will have the property that for every operator corresponding to a labeled vertex of *λᵢ*, the state |λ*ᵢ*〉 will have the corresponding expectation value for that operator. No other properties of the state are assumed, so a partially labeled tree does not uniquely specify a state.

Preparing the first state |*λ*₀〉 is easy: one may simply create any choice of *n*/2 singlets. Constructed now is a primitive operation that called *splitting,* which has the following properties: (1) The splitting primitive takes as input a set of *n* qubits with total spin *S* for some *n, S*; there are no other assumptions on the input state. (2) One fixes some *m* < *n* and some *S', S"* with |*S*" - *S'*| ≤ *S* ≤ *S" + S'.* (3) The splitting primitive applies *s*/*t* measurements to qubits from that set, taking polynomial expected time. (4) The resulting state has (up to exponentially small error) the first *m* qubits with total spin *S'* and the remaining *n - m* qubits with total spin *S"*.

Given this splitting primitive, one can then produce each state |*λ*_{*i*+1}〉 from the state |*λᵢ*〉, by applying splitting to the set of qubits corresponding to descendants of *vᵢ,* with *S', S"* depending on the labels in *λ*_{*i*+1} for the children of *vᵢ.* The splitting primitive above is now constructed. First, let a set of *n* qubits with total spin S be in *canonical form* if there are *n* - 2*S* singlet pairs (in some fixed configuration, rather than a superposition) and the remaining 2*S* qubits are in a totally symmetric state. For example, a state on 8 qubits with qubits 1, 3 in an singlet and 4, 7 in a singlet and 2, 5, 6, 8 in a totally symmetric state is in canonical form. The construction of splitting is divided into four steps, as follows.

*First Step-* First, take the *n* qubits and bring them to canonical form. The construction is recursive. If *n* = 2*S*, then they are already in canonical form. If not, pick a pair of qubits at random and measure *s*/*t*. If the result is triplet, pick another pair at random, and try again, continuing until eventually some pair is in a singlet. That gives one singlet; then bring the remaining *n* - 2 qubits to canonical form using the same algorithm recursively. This takes polynomial expected time.

*Second Step-* Recall that the *n* qubits are to be divided into two sets, with *m* and *n - m* qubits respectively, and with total spin *S'* and *S"*, with *S"* ≥ *S'.* Let Δ = *S" - S'.* Let ${S}_{min}^{′}$ and ${S}_{min}^{"}$ be the two values for total spin such that ${S}_{min}^{"} - {S}_{min}^{′} = Δ$ and ${S}_{min}^{"} + {S}_{min}^{′} = S$*.* The second step will be to take the state after the first step which is already in canonical form, and divide it into two sets of qubits, of sizes *m, n - m* respectively, with total spins ${S}_{min}^{′}$ and ${S}_{min}^{"}$ respectively, with each set in canonical form. This can be done easily: take the *n* - 2*S* qubits in a totally symmetric state, and place $2 {S}_{min}^{′}$ qubits in the first set and the remaining $2 {S}_{min}^{"}$ in the second set. Then, take the singlets from the state in the first step, and place each singlet into one of the two sets, so that the total sizes of the two sets are correct.

*Third Step-* The third step acts only on the singlets from the two sets. This step will take Δ singlets from the first set and Δ singlets from the second set, and act only on the spins in those singlets using *s*/*t* measurements. Qubits will remain in the set they are in after the second step, but their state will change due to this step. What the step will do is bring it to a state where those qubits are now in a totally symmetric state in each set individually (i.e., the 2Δ qubits in the singlets in the first set are totally symmetric, as are the 2Δ qubits in the second set), while the total spin of those 4Δ qubits is still 0.

To do this an iterative algorithm is used. First, (a) bring each set into canonical form. If there are no singlets in either set, terminate. Otherwise, (b) if one set has a singlet, then so must the other. Pick a pair of qubits, one from a singlet in each set, and measure *s*/*t*. Call these qubits 1, 2 and call the singlets that they are in respectively *s*₁, *s*₂. Then, measure *s*/*t* on both qubits in *s*₁*.* If the result is *s*, then this pair of measurements has had no effect on the sets, so repeat it. If the result is *t* then go back to step (a).

This process takes polynomial expected time. Consider the effect of (b). One may assume that the measurement of *s*/*t* on *s*₁ gives *s* (as otherwise the process repeats). Suppose that before measuring 1, 2, the total spin in each set was *S*. After measuring *s*/*t,* the total spin in each set must be one of the possibilities *S* - 1, *S, S +* 1. The total spin squared before (b) is *S*(*S +* 1) and the total spin squared after (b) has expectation value *S*(*S* + 1) + 2. The process of bringing into canonical form measures the total spin in each set. Suppose that the spin after B were *S* - 1 and *S* + 1 both with probability ½. In this case, the expected total spin squared would be $\frac{\left(S-1\right) S + \left(S+1\right) \left(S+2\right)}{2} = {S}^{2} + S + 1 < S \left(S+1\right) + 2 .$ (4.8) Hence, the probability that the spin is *S* + 1 must be *greater* than the probability that it is *S* - 1. So the total spin does a biased random walk with the bias toward increasing spin, and so the spin must become maximal in at most polynomial time.

*Fourth Step-* After the third step, each of the two sets has three subsets. Let 1*A,* 1*B,* 1*C* denote the three subsets of the first set and 2*A*, 2*B,* 2*C* denote the three subsets of the second set. The sets 1*A,* 2*A* each contain qubits in some product of singlets. The sets 1*B* and 2*B* each contain qubits in a totally symmetric state, with the union of 1*B* and 2*B* having total spin 0. The sets 1*C* and 2*C* also each contain qubits in a totally symmetric state, but now the union of 1*C* and 2*C* is also in a totally symmetric state. In the fourth step, one acts on sets 1*B* and 1*C* to try to bring them to a totally symmetric state; also do the same procedure to 2*B* and 2*C* with the same goal. To do this, apply a large number of *s*/*t* measurements on qubits randomly chosen from the union of 1*B* and 1*C.* If all measurement outcomes are *t*, then the application of these measurements converges to projecting onto the state where those qubits in 1*B* union 1*C* are in a totally symmetric state of total spin *S'*, which results in success. The convergence to this projector is exponential, once more than polynomially many measurements have been made. The probability that all measurements are *t* in this step is at least inverse polynomial. This may be seen by computing the projection of the initial state onto the space where 1*B*, 1*C* are totally symmetric and 2*B*, 2*C* are totally symmetric.

### 5. Generalizing the model

The STP model can be generalized in several ways. One natural generalization is to consider symmetries other than *SU*(2), such as *SU*(*m*) for *m* > 2. Another natural generalization is to consider higher spin representations of *SU(2).*

In a higher spin representation model, data resides in qudits, for *d* = 2*S* + 1 with *S* integer or half-integer. Different kinds of qudits may be used concurrently, for example both qubits (*S* = 1/2) and qutrits (*S* = 1). Any two qudits (even qudits of different dimensions) may be brought together and the total spin measured.

The deuterium atom is a convenient toy example. The deuterium nucleus has total spin 1, while the electron has spin ½. The deuterium atom then has total spin ½ or $\frac{3}{2}$ and there is a hyperfine splitting between these states. Interestingly, this higher spin model can be simulated using just *s*/*t* on qubits. To simulate a qudit with spin *S*, use 2*S* qubits in a totally symmetric state. When two qudits with spin *S, S'* are brought together, one can measure the total spin of the 2*S* + 2*S'* qubits by repeatedly selecting pairs of qubits uniformly at random and measuring s/*t*. Exactly as in Section 4, the convergence in accuracy is exponential when the number of measurements is polynomial in the total spin. After measuring the total spin, one can then bring the 2*S* + 2*S'* qubits into two sets of 2*S*, 2*S'* qubits respectively, both in a totally symmetric state, again as in Section 4. Indeed, this is done by the splitting primitive.

### 6. PostSTP equals PostBQP

In this section, *s*/*t* with postselection is formally defined. Let PostSTP be the class of languages *L* ⊂ {0, 1}* such that for all inputs *x* the following holds. Initialize a quantum state as a product of polynomially many singlets. Then some classical algorithm (determined by *L*) takes *x* as input and outputs a sequence of polynomially many *s*/*t* measurements (as well as outcomes to postselect on for all but the last measurement), taking polynomial time to output this sequence. The sequence of measurements is now applied to the input state. One may postselect on all but the last measurement, assured that the outcomes postselected on have nonzero probability. Finally, if *x* ∈ *L*, then the last measurement is s with probability at least *p* for some *p >* 0 and if *x* ∉ *L,* then the last measurement is s with probability at most *p'* for some *p'* strictly less than *p.* The quantities *p, p'* are independent of input size.

To define postselection in symbols, let *ψ*₀ be the product of singlets which is the initial state. Let Π*ⱼ* be a projector which projects onto the desired outcome (either *s* or *t*) of the *j*-th measurement. Let *Aⱼ* = Π*ⱼ*Π_{*j*-1} ... Π₁ be the product of these projectors up to the *j*-th one. Let there be *K* = poly(*N*) measurement outcomes postselected on, and let Π_{*k*+1} denote the projector onto the singlet outcome for the last (the (*K* + 1)-st) measurement. Then, the probability that the last outcome is *s* is $\frac{\left〈{ψ}_{0}\left|{A}_{K}^{†}{{\prod }_{K + 1} A}_{K}\right|{ψ}_{0}\right〉}{\left〈{ψ}_{0}\left|{A}_{K}^{†}{A}_{K}\right|{ψ}_{0}\right〉} ,$ (6.1) where it is promised that the denominator is nonzero.

It will now be shown that (Theorem 1) PostSTP equals PostBQP.
This result is proved by showing first, in Section 6.2, that postselection can be used to simulate imaginary time evolution with Heisenberg interactions. Cubitt [Ref. 11] showed that approximating the ground state energy of Hamiltonian with Heisenberg interactions is QMA-hard, showing already that PostSTP is at least as powerful as QMA: simply evolve under the desired Heisenberg Hamiltonian for a polynomially long imaginary time. To show that one obtains PostBQP, the ability to produce evolution 'time-dependent' Heisenberg interactions in imaginary time is used-*i*.*e*., to vary the Heisenberg Hamiltonian evolved under. The same encoding is used here as in [Ref. 11] to show in Section 6.3 that this provides PostBQP. Appropriate choices of time-dependent Heisenberg Hamiltonians will provide both circuits and measurement. It is desirable to make errors exponentially small when doing this. At the outset, Section 6.1 shows that the probabilities postselected on can only ever become exponentially small in poly(*N*).

*6.1. A remark on how small amplitudes can become.* Let *ψ*₀ be the product of singlets which is the initial state for PostSTP. The following lemma is now shown. (Lemma 3) The nonzero probabilities that can occur in PostSTP are all Ω(exp(- poly(*N*)).

(Proof) The probability that the *j*-th measurement outcome has the desired value is $\frac{\left〈{ψ}_{0}\left|{A}_{j}^{†}{A}_{j}\right|{ψ}_{0}\right〉}{\left〈{ψ}_{0}\left|{A}_{j - 1}^{†}{A}_{j - 1}\right|{ψ}_{0}\right〉} .$ (6.2) Clearly, the denominator is at most 1, so the numerator may be subject to a lower bound. Note that every *t* postselection can be replaced by (1/2)(1 + SWAP), where SWAP is the gate that swaps a pair of qubits. Similarly, every *s* postselection can be replaced by 1/2(1 - SWAP). Hence, the numerator is the sum of 4*^{j}* different terms, corresponding to replacing individual projectors Π*ⱼ* by either the identity or SWAP. The contribution of any such term to the expectation value is of the form 4*^{j}*〈*ψ*₀|Permute|*ψ*₀〉, where Permute applies some permutation to the qubits. It is easy to see that for any such permutation, the expectation value 〈*ψ*₀|Permute|*ψ*₀〉 is ±2^{-*J*} for some 0 ≤ *J* ≤ *N -* 1. So, the expectation value is a sum of 4*^{j}* different terms, each of which equals ±4^{-*j*}2^{-*J*(term)}, for some *J*(term) depending on term. Hence, if nonzero, the expectation value is at least *4*^{-*j*}2^{*-N-*1}, where *j* ≤ poly(*N*).

*6.2. Simulating imaginary time evolution.* Let *ψ_{resource}*(*ε*) be the four qubit state, on four qubits called *C, D, E, F,* with total spin 0 given by first preparing *C, E* in a singlet and *D, F* in a singlet and then acting with 1 + *εS̅_{E} · S̅_{F},* and finally appropriately normalizing the state to unit norm. Now consider the effect of bringing in two extra qubits *A, B* in some arbitrary state *ψ_{AB},* and postselecting on *A, C* being s and on *B, D* being s. One may commute the postselection on *A, C* and *B, D* being in s with the action of 1 + *εS̅_{E}* · *S̅_{F}* used to define *ψ_{resource}*(*ε*). The effect of this operation is to teleport the state (1 + *εS̅_{A}* · *S̅ψ_{AB}* to qubits *E, F,* while leaving *A, C* and *B, D* in singlets.

If one can produce *ψ_{resource}*(*ε*), then one can apply the operation 1 + *εS̅_{A}* · *S̅_{B}.* Of course, the ability to apply 1 + *εS̅_{A} · S̅_{B}* correspondingly implies the ability to create *ψ_{resource}*(*ε*). Thus, the two things (the state and the operation) are equivalent as resources. Note that the projection onto *t* is given (up to normalization) by the operation (1 + *ε*₀*S̅_{A}* · *S̅_{B}*) with *ε*₀ = 4/3, so one can create *ψ*_{resource}(4/3).

Given below is a protocol to reduce *ε*, consuming a pair of states *ψ*_{resource}(*ε*) with given *ε* and applying the operation (1 + *ε'S̅_{A} · S̅_{B}*) to an arbitrary pair of qubits *A, B,* with $ϵ ′ = \frac{{ϵ}^{2}}{4} .$ (6.3) If *A, B* were in a singlet initially, this creates *ψ*_{resource}(*ε*'). By applying this protocol repeatedly, one can produce a sequence of states *ψ_{resource}*(*εᵢ*) with *ε*₀ = 4/3 and ${ϵ}_{i + 1} = \frac{{ϵ}_{i}^{2}}{4} .$ (6.4) Of course one could also start with *ε*₀ = -4 which projects onto s up to normalization.

The protocol is as follows. Create a pair of qubits *C, D* in a singlet, and let *A, B* be arbitrary. Then, apply (1 + *εS̅_{A} · S̅_{C}*)(1 *+ εS̅_{B}* · *S̅_{D}*), consuming the two copies of *ψ*_{resource}(*ε*) to do this, and again project onto *C, D* in a singlet. A little algebra shows that the resulting state (up to normalization) is a singlet on *C, D* and the operation (1 *+ ε'S̅_{A} · S̅_{B}*) is applied. It is to be emphasized that Eq. (6.3) is *not* a perturbative result for small *ε*, but rather holds for *all ε.*

The cost of applying the i-th operation, (1 + *ε*₂*̅S̅*̅_{A} · *S̅_{B}*), is exponential in *i*. At the same time, the magnitude of *εᵢ* decreases doubly-exponentially in *i*, roughly squaring at every step. Thus, for any *x* ∈ (0, 1],one can construct the operation 1 *+ εS̅_{A}S̅_{B}* for some *ε* in the interval [*x*², (4/3)*x*] using a number of operations at most logarithmic in *ε*⁻¹: simply search for the first term in the sequence which lies in this interval.

To obtain operations with negative *ε*, consider a slight modification of the above sequence of operations. Create a pair of qubits *C, D* in a singlet, and let *A, B* be arbitrary. Apply (*1+ε*₀*S̅_{A}·S̅_{C}*)(1+*εᵢS̅_{B}·S̅_{D}*), and again project onto *C, D* in a singlet, with *ε*₀ = -4/3 and *εᵢ* from the above sequence.

Therefore, (Lemma 4) For any *ε̃* ∈ [-1, 1] and any *δ* > 0, the operation 1*+ εS̅_{A}·S̅_{B}* can be constructed for some *ε* with |*ε* - *ε̃*| ≤ *δ*, using a number of operations at most *O*(log(*δ*^{*-*1})*δ*⁻²). (Proof) Construct (1 *+ xS̅_{A} · S̅_{B}*) for some *x* which has the same sign as *ε̃*, with *x* sufficiently small compared to *δ*, but *x* not much smaller than *δ*², i.e., *x* = Ω(*δ*²)). Then, take powers of this operation to obtain a suitable 1 + *εS̅_{A}* · *S̅_{B}.* Since *x* is not much smaller than *δ*², it takes at most *O*(*δ*⁻²) operations to do this. When constructing powers of the operation, it is more convenient to work with an exponentiated form of the operation: 1 *+ xS̅_{A}* · *S̅_{B}* = exp(*yS̅_{A}* · *S̅_{B}*), where *y* depends on *x*. Likely the dependence of the number of operations on *δ* can be greatly reduced. Given here is an unoptimized construction that involves first constructing an operation with a very small *x* and then taking powers of that operation. One might instead apply operations with several different *εᵢ* with different magnitudes to reduce the total.

Therefore, (Lemma 5) In PostSTP, one can approximate imaginary time evolution under a time-dependent Heisenberg Hamiltonian, up to inverse polynomial error.

The proof of this lemma is immediate, applying the appropriate definitions. A 'Heisenberg Hamiltonian' means a Hamiltonian of the form *H* = Σ*_{i,j} JᵢⱼS̅ᵢ·S̅ⱼ,* where *Jᵢⱼ* is some polynomially bounded matrix. Imaginary time evolution under such a Hamiltonian refers to evolving an initial state under the equation ∂*ₜψ* = *Hψ,* up to normalization. By 'time-dependent', one allows *H*(*t*) = Σ*_{i,j} Jᵢⱼ*(*t*)*S̅ᵢ · S̅ⱼ,* where *Jᵢⱼ*(*t*) is some polynomially bounded matrix which depends on t and, further, ∂*ₜψ*(*t*) = *H*(*t*)*ψ*(*t*)*.* Finally, the inverse polynomial error is an error on the right-hand side of the evolution equation: *∂ₜψ* = *H*(*t*)*ψ + E*(*t*), where *E*(*t*) is a state whose norm may be made polynomially smaller than *ψ*(*t*)*.*

To prove the lemma the evolution equation may be Trotterized and the Trotter steps simulated using postselection, by picking *ε* to be polynomially small in the state *ψ_{resource}*(*ε*), and applying Lemma 4.

This already immediately implies that (Corollary 1) PostSTP contains QMA. (Proof) By [Ref. 11], approximating the ground state of a Heisenberg Hamiltonian to inverse polynomial error is QMA-hard. One can simulate the imaginary time evolution to inverse polynomial error, which allows this approximation.

*6.3. Simulating PostBQP.* However, the goal is not just to prove that PostSTP contains QMA, but rather than PostSTP is equivalent to PostBQP. To do this, results from [Ref. 11] are used again-in particular, the result that using Heisenberg interactions one can implement logical qubits (using three physical qubits for each logical) and obtain terms *X, Z* on any given logical qubit as well as terms *XX, ZZ* on pairs. Thus, it suffices to consider a model of computation in which there are qubits (which for the rest of this subsection refer to the *logical* qubits of [Ref. 11]), and one has the ability to implement imaginary time evolution under time-dependent *X, Z, XX, ZZ,* up to inverse polynomial error. Throughout this subsection, 'time' refers to imaginary time.

By turning on an *XX* term on a pair of qubits for a long time and then turning it off (while leaving other terms off), one can approximately project onto the *XX* = +1 or *XX* = -1 eigenstates, and similarly using *ZZ* terms one can approximately project onto *ZZ* = +1 or *ZZ* = -1 eigenstates. Further, by turning on a sum of *X* and *Z* terms on a single qubit (while leaving other terms off), one can prepare an ancilla qubit in a state which is approximately any desired pure state cos(*θ*)|0〉 +sin(*θ*)|1〉. These abilities suffice. First, one can approximately prepare a qubit in a |+〉 state, and then using it as an ancilla, one can approximately apply a CNOT from a source to a target by using the ability to approximately postselect on *ZZ* = +1 and *XX* = +1 eigenstates. This is the same as was used in Section 3.1.1 from [Ref. 7] [Ref. 8]. Note importantly that here imaginary time evolution is used to approximately apply a unitary gate. This should be not be surprising; after all, the well-known idea of measurement-based quantum computation [Ref. 12] uses a sequence of measurements to apply unitary gates. Also, by preparing ancillas which are approximately in states cos(*θ*)|0〉 + sin(*θ*)|1〉 for other choices of *θ*, and using the CNOT gates and state injection, one can approximately implement unitary rotations to produce approximate rotations by *exp*(*iθY*) where *Y* is the single-qubit Pauli *Y*.

The ability to do CNOT and rotations *exp*(*iθY*) allows universal quantum computation. So, ignoring issues of error (*i.e*., the fact that all these constructions give only approximations to the corresponding gates), one can implement arbitrary quantum circuits and further postselect on measurement outcomes since one can implement imaginary time evolution under *Z*, giving PostBQP.

The issue of error can be resolved by implementing a fault tolerant construction using these approximate gates. Note that the error in the gates can be made arbitrarily small. Indeed, one can even make the error in individual gates 1/poly(*N*) for any polynomial at the cost of a polynomial overhead, so one can make the error in gates polynomially smaller than the inverse of the total number of gates. Thus, if the goal were simply to simulate BQP, where one may be satisfied with an inverse polynomial error in the output probabilities of a quantum circuit, there would be no need for any fault tolerance. However, since PostBQP is also to be simulated, exponentially small errors are required. So, some degree of fault tolerant construction is desired. Naturally the ability to make the error in individual gates polynomially small compared to the inverse of the total number of gates certainly simplifies the fault tolerant construction. However, it is believed that the usual threshold theorems can be applied to the present setting, and, so long as the error in individual gates is sufficiently small, one can make the error in logical operations exponentially small.

The usual threshold theorems involve replacing idealized unitary gates by CPTP maps that approximate (in diamond norm) the desired unitary operations. Instead, the approach herein replaces idealized unitary gates by linear operators that act on pure states (rather than mixed states) that are close in operator norm to the desired unitary. However, it is now shown that the usual threshold theorems can be adapted to this case.

Consider any given gate in the circuit, which ideally would be implemented by some unitary called *U.* Suppose instead one implement some map *A* (which is a linear operator on pure state) with ∥*A* - *U*∥ ≤ *ε*, where ∥···∥ is the operator norm. Then, (1 - *ε*)*A* has singular values bounded by 1 and if one defines *B* to be any operator such that *B*^{†}*B* = *I -* (1 - *ε*)²*A*^{†}*A* then $E \left(ρ\right) ≡ {\left(1-ϵ\right)}^{2} {AρA}^{†} + {BρB}^{†}$ (6.5) is a CPTP map with two Krauss operators, (1 - *ε*)*A, B.*

Making such a replacement for all gates in the circuit one obtains a 'noisy circuit' where every gate has two Krauss operators, with the first Krauss operator being *O*(*ε*) close to the ideal unitary. The usual threshold theorems apply to this noisy circuit for sufficiently small *ε* showing that the logical error is exponentially small. Then, the situation relevant here is one in which every time a CPTP map is applied for some gate, one selects the first Krauss operator (that is, (1 - *ε*)*A* in this case), rather than the second. This can be physically thought of as selecting a particular noise pattern.

Thus, if one select the first Krauss operator for every CPTP map in the noisy circuit, is the error still exponentially small? Intuitively, there is no problem: the first Krauss operator is closer to what is desired than the second Krauss operator, so the situation in which one selects that Krauss operator every time should be even better than a random choice.

To prove this, of course one could reprove the threshold theorem, using the constructed gates (which are not noisy in that they map pure states to pure states but which still only approximate the desired gates). Indeed, this could be done simply by following through some existing construction and showing that the error is exponentially reduced if the first Krauss operator is selected every time. However, it is desirable to minimize the effort and show that the error is exponentially small using the standard threshold theorem as a 'black box', without delving into the proof. This may be done using a simple trick. Use some hierarchical construction to prove the threshold theorem, see for example [Ref. 2] for a review of various constructions. Using such a hierarchical construction of the threshold theorem, one considers codes of some *O*(1) size, and proves that each step of the hierarchy reduces the error rate. If the error rate is *ε* at some level, then it is *O*(*ε^{k}*) for some *k >* 1 at a higher level of the hierarchy and so for sufficiently small *ε* the error rate reduces. This error rate is regarded as a sum over different trajectories, corresponding to different choices of Krauss operators in each CPTP map. The contribution of the trajectory where one selects the first Krauss operator in every map is 1 - *O*(*ε*), with the constant hidden in the big-O notation depending on the size of the code. So, for sufficiently small *ε*, the contribution of the that trajectory is the dominant one and so the error rate for that trajectory at the next level of the hierarchy is also *O*(*ε^{k}*), *i.e.,* the hierarchical construction reduces error rate for sufficiently small *ε* for this case as well.

### 7. A symmetry-protected quantum-computation method

The principles herein can be implemented in various quantum-computing methods. In one example scenario, a developer or team of developers may develop quantum-computer code targeting a particular task or problem. The quantum-computer code may be composed in a relatively high-level quantum-computer programing language-*e.g*., an implementation-agnostic language-and may include many-qubit operations. It may be desirable to execute the quantum-computer code on a fault-tolerant quantum computer or in a fault-tolerant manner.

To that end, the quantum-computer code may be received in a suitably configured input engine, such as input engine 40 of FIG. 1. Input engine 40 is coupled operatively to decomposition engine 42 and execution engine 44. The decomposition engine is configured to convert (*i.e*., to decompose) the quantum-computer code into a sequence of one- or two-qubit, implementation-dependent operations as described herein. The sequence of operations may take the form of a directed acyclic graph (DAG), *G* = (*V, E*), where each of a set of vertices *V* corresponds to a quantum-gate operation, and where an edge (*v, w*) ∈ *E* joins vertices *v* and *w* if the computation at *v* depends on the result of the computation at *w.* As a simple example, in order to compute the length of the hypotenuse of a right triangle with sides of length *a* and *b*, the computation $\sqrt{{a}^{2} + {b}^{2}}$ is formulated as a graph with four vertices, which represent the two squaring operations, the addition operation, and the square-root operation. Via execution engine 44, these operations are applied to the qubits of a qubit register, augmented perhaps by ancillary qubits that store intermediate results.

As noted in Section 1, the low-level operations output by the decomposition engine may comprise matrix multiplications (*e.g*., rotations of the state vector), which are effected by sending predfined signals into the qubit register from classical hardware. The signals may also trigger a measurement, where return signal of some kind is received back into the classical hardware from the qubit register. In some examples, the decomposition engine is configured to select each of the low-level operations from a predefined set consisting of operations and/or measurement. The result of a given measurement may affect the downstream portion of the DAG, may determine which low-level operation comes next in the sequence, which states are prepared in ancilla registers, *etc*.

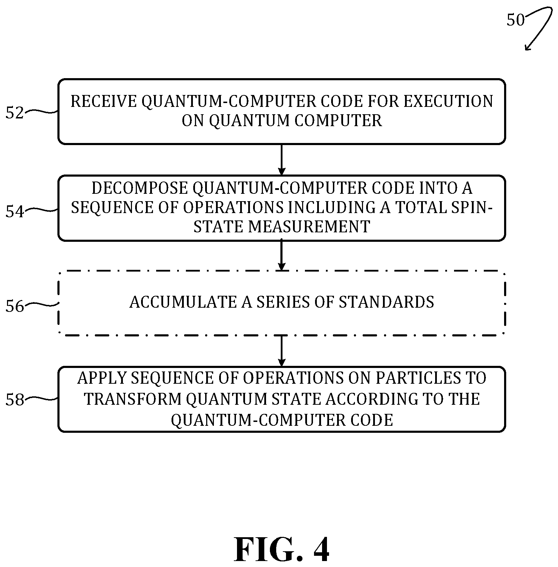

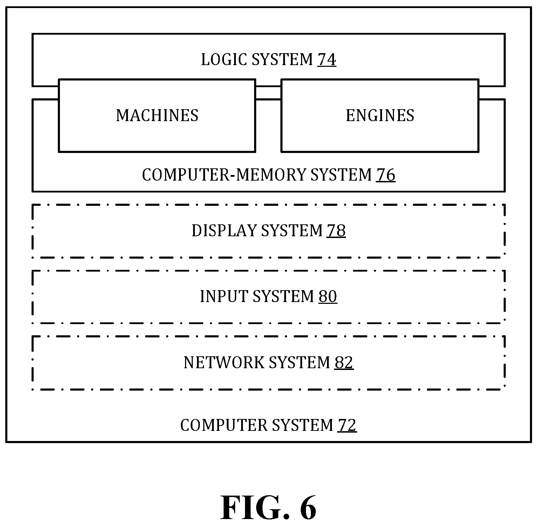

In light of the foregoing discussion, FIG. 4 shows aspects of an example quantum-computation method 50. Method 50 may be enacted on a quantum computer coupled communicatively to a classical computer system. The classical computer system may include input, decomposition, and execution engines as described herein. Selected aspects of a classical computer system suitable for this purpose are described hereinafter, with reference to FIG. 6.

At 52 of method 50, an input engine receives quantum-computer code for execution on the quantum computer. As described above with reference to FIG. 1, the quantum computer includes a qubit register having a plurality of qubits associated with a corresponding plurality of particles, which collectively define a quantum state.

In some examples the quantum-computer code may define a concurrent two-qubit measurement, such as a two-qubit measurement in a Bell basis as described in Section 3.1.1. In some examples, the quantum-computer code includes preparation of a pure state in one of the plurality of qubits, as described in Section 3.1.2. In some examples, the quantum-computer code includes application of a Hadamard gate or an S gate, as described in Section 3.2.1. In some examples, the quantum-computer code may define a permutational quantum computation, as described in Section 4.

At 54 the decomposition engine decomposes the quantum-computer code into a sequence of operations including a total spin-state measurement on particles corresponding to two or more of the qubits. The total spin-state measurement is enacted on two particles corresponding to exactly two qubits, which may, in some scenarios, be entangled. The total spin-state measurement may be *SU*(2)-invariant (at least) and therefore unresponsive to decoherence of the quantum state in a substantially SU(2)-invariant noise environment. Minor deviation from SU(2)-invariance may result in small, perhaps manageable, errors. More generally, insensitivity to SU(2)-invariant noise reduces decoherence due to mixed-noise sources. The total spin-state measurement distinguishes a spin triplet of the two particles from a spin singlet of the two particles.

In some examples, the sequence of operations at 54 further includes a pair of orthogonal, single-qubit Clifford operations, such as rotation operations. Such operations are unitaries associated with transformation that are applied to the quantum state held in the qubit register. The pair of orthogonal, single-qubit Clifford operations includes a Clifford X rotation operation and a Clifford Z rotation operation. Each of the sequence of operations above is selected from a pair of orthogonal, single-qubit Clifford operations, comprising Clifford X and Clifford Z, and the total spin-state measurement.

In some examples, the sequence of operations provides teleportation of one or more qubit states onto the plurality of qubits, as described in Section 3.1.1. In examples in which the quantum-computer code defines a permutational quantum computation, the sequence of operations may provide a weak-model simulation of the permutational quantum computation, as noted in Section 4.

At optional step 56, in examples in which the quantum-computer code includes a single-qubit Pauli measurement, a series of standards is accumulated to support the single-qubit Pauli measurement, as described in Section 3.2.2.

At 58 an execution engine of the quantum computer applies the sequence of operations on the plurality of particles to thereby transform the quantum state according to the quantum-computer code. The reader having ordinary skill in the art of quantum computing will understand that the detailed manner of execution depends, in any given implementation, on the selection of physical particles that embodies the qubit register. Such a reader will further understand that various state-of-the-art approaches will be known for implementing single-qubit Clifford gates, such as Clifford X and Clifford Z. In contrast, the approach herein places certain constraints on the manner in which the total spin-state measurement s=t may be enacted. In sum, to guarantee SU(2) symmetry, s=t must not reveal any anisotropy of the total spin state of the particles being measured.

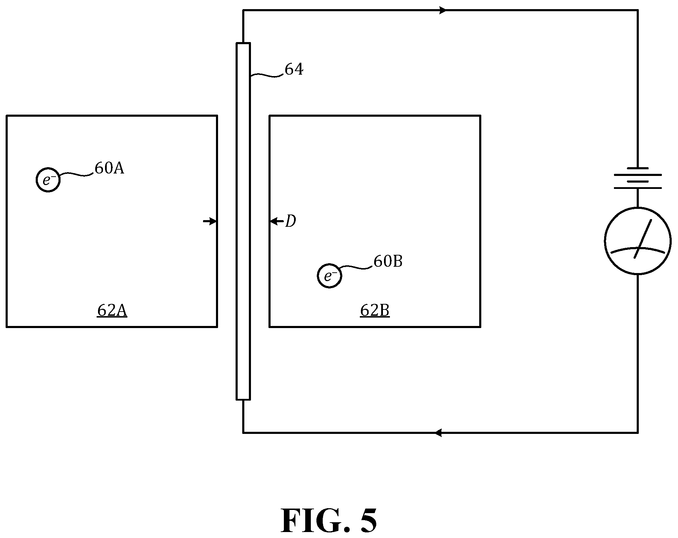

One, non-limiting example of a suitable *s*/*t* measurement is illustrated schematically in FIG. 5. This drawing represents an electron 'spin-blockade' measurement, where each qubit corresponds to a particle in the form of an electron 60 confined to a quantum dot 62. The measurement comprises positioning a pair of quantum dots (62A, 62B) within tunneling distance *D* and interrogating the pair for evidence of electron exchange. This can be done by attempting to draw electronic current through nanowire 64 arranged in the tunneling channel. In this measurement, the current through the nanowire is suppressed Coulombically when the pair of confined electrons have opposite spins (*S* = 0), as either electrons is free to exchange through the tunneling channel, transiently occupying the same quantum dot as its partner. By contrast, two electrons with parallel spins (*S* = 1) can *never* occupy the same quantum dot in the orbital ground state. Accordingly, electron exchange is effectively forbidden for all triplet states, so current through the nanowire is not suppressed Coulombically. Significantly, this type of measurement reveals no information that would distinguish among the three anisotropic microstates of the spin triplet, thereby retaining *SU*(2) symmetry.

No aspect of the foregoing methods or configurations should be understood in a limiting sense, because numerous variations, extensions, and omissions are also envisaged. While the principles herein are described primarily with reference to qubits embodied as spin ½ fermions, such principles are readily extensible to qunits having greater degrees of freedom. Thus, the quantum-computer code received at 52 of FIG. 4 may be configured to operate on a quantum computer having a plurality of qunits (qudits, qutrits, *etc*.) associated with a plurality of particles of any integer or half-integer spin. A decomposition engine configured according to the principles herein may effect the decomposition of such code into a sequence of operations including a total spin-state measurement on such particles, which are then applied to transform the quantum state.

### 8. Approximating rotations by powers of a fixed rotation

Let *θ* be an irrational multiple of 2*π*. Then, the integer multiples of *θ* are dense in the unit circle. This has the implication that, given the ability to implement rotation exp(*i*Z*θ*) on a single qubit, one can approximate the rotation exp(*i*Z*ϕ*) for any *ϕ* to any desired accuracy by repeating the operation exp(*iZθ*) sufficiently many times. However, it becomes interesting to ask: *how many* times must one repeat the operation exp(*iZθ*) to attain some given accuracy. This is equivalent to the question: given some *ϕ* and some *δ* > 0, what is the smallest *n* such that *nθ* is within distance *δ* of *ϕ*, modulo 2*π*.

The answer to the question depends on the *irrationality measure µ* of *θ*/(2*π*). The irrationality measure *µ* of a number *x* is defined to be the smallest number such that for any *ε* > 0, thus $\left|x-\frac{p}{q}\right| > \frac{1}{{q}^{μ + ϵ}}$ (8.1) for all sufficiently large integers *q,* for all *p.*

Some numbers have infinite irrationality measure; these are called Liouville numbers. As an example, consider a number such as Σ_{j>0} 10^{*-f*(*j*)}, where *f*(*j*) is some fast growing function such as *j*!. Almost all (in the sense of measure theory) real numbers have irrationality measure 2. The arctangent of any algebraic number has finite irrationality measure.

(Lemma 6) Assume *θ*/(2*π*) is irrational with irrationality measure *µ*. Define the distance between angles in the obvious way, as the shortest distance between them on the circle; write this distance using an absolute value sign. Then, for any *ε* > 0, for any *ϕ* and any *δ* > 0, there is some *m* with |*mθ - ϕ*| ≤ *δ* and with $m \leq O \left(\frac{1}{{δ}^{μ + ϵ}}\right)$, where the constant hidden in the big-O notation depends on *ε*. (Proof) Consider the set {0, *θ*, *2θ, . . . , kθ*}, where $k = \left⌈2π/δ\right⌉$. All elements of this set are distinct. So, there must be two different elements, call them *j*₁*θ, j₂θ,* with |*j*₁*θ* - *j*₂*θ*| ≤ (2*π*)/*k.* Let *q* = *j*₂ - *j*₁, so *qθ* is within distance (2*π*)/*k* ≤ *δ* of 0.

By the definition of irrationality measure, multiplying both sides by 2*πq* provides $\left|qθ-2πp\right| > {\left(\frac{2 π}{q}\right)}^{μ + ϵ - 1}$ for sufficiently large *q.* So, for sufficiently large *q, qθ* is observed at least distance ${\left(\frac{2 π}{q}\right)}^{μ + ϵ - 1}$ from 0. For smaller *q,* it is possible that *qθ* is closer than that, but there are only finitely many such *q,* so *qθ* is at least *θₘᵢₙ* for some *θₘᵢₙ* > 0 depending on *ε*.

Now consider the sequence of angles 0, *qθ,* 2*qθ,* 3*qθ, . . ..* These angles change by at most *δ* from one to the next, so some angle in the sequence is within *δ* of *ϕ*. At the same time, they change by at least $Δ ≡ min \left({θ}_{min}, {\left(\frac{2 π}{q}\right)}^{μ + ϵ - 1}\right)$, so one only needs to consider terms up to $\left⌈2π{Δ}^{- 1}\right⌉$ in the sequence to get an angle within *δ* of *ϕ*. Note that *q* is bounded by 2*k,* so it suffices to consider terms up to *O*(*k*^{*µ+ε-*1}) in the sequence. Since *q* is *O*(*k*)*,* one considers *m* up to *O*(*k^{µ+ε}*).

For additional context, the interested reader is referred to the following references.
[Ref. 1] Steven P. Jordan. Permutational quantum computing. Quantum Information & Computation, 10(5) 470-497, 2010.
[Ref. 2] Daniel Gottesman. An introduction to quantum error correction and fault-tolerant quantum computation. American Mathematical Society, 13-58, 2010.
[Ref. 3] A. Yu Kitaev. Fault-tolerant quantum computation by anyons. Annals of Physics, 303(1):2-30, January 2003.
[Ref. 4] Matthew P. A. Fisher. Quantum cognition: The possibility of processing with nuclear spins in the brain. Annals of Physics, 362:593-602, November 2015.
[Ref. 5] A. C. Johnson, J. R. Petta, C. M. Marcus, M. P. Hanson, and A. C. Gossard. Singlet-triplet spin blockade and charge sensing in a few-electron double quantum dot. Physical Review B, 72(16), October 2005.
[Ref. 6] Hendrik Poulsen Nautrup and Tzu-Chieh Wei. Symmetry-protected topologically ordered states for universal quantum computation. Physical Review A, 92(5), November 2015.
[Ref. 7] Zheng-Yuan Xue. Measurement based controlled not gate for topological qubits in a Majorana fermion and quantum-dot hybrid system. The European Physical Journal D, 67(4), April 2013
[Ref. 8] Torsten Karzig, Christina Knapp, Roman M. Lutchyn, Parsa Bonderson, Matthew B. Hastings, Chetan Nayak, Jason Alicea, Karsten Flensberg, Stephan Plugge, Yuval Oreg, Charles M. Marcus, and Michael H. Freedman. Scalable designs for quasiparticle-poisoning-protected topological quantum computation with Majorana zero modes. Physical Review B, 95(23), June 2017.
[Ref. 9] V. Kh. Salikhov and M. G. Bashmakova. On irrationality measure of arctan(1/3). Russian Mathematics, 63:61-66, 2019.
[Ref. 10] Sergey Bravyi and Alexei Kitaev. Universal quantum computation with ideal Clifford gates and noisy ancillas. Physical Review A, 71(2), February 2005.
[Ref. 11] Toby Cubitt and Ashley Montanaro. Complexity Classification of Local Hamiltonian. SIAM Journal on Computing 45(2):268-316, January 2016.
[Ref. 12] Robert Raussendorf, Daniel E. Browne, and Hans J. Briegel. Measurement-based quantum computation on cluster states. Physical Review A, 68(2), August 2003.

### 9. Classical computer system and additional description

The methods herein may be tied to a computer system of one or more computing devices. Such methods and processes may be implemented as an application program or service, an application programming interface (API), a library, and/or other computer-program product.

FIG. 6 provides a schematic representation of a classical computer system 72 configured to provide some or all of the classical computer system functionality disclosed herein. In some examples, classical computer system 72 may host a quantum-program simulator 84 and/or debugger 86 as described hereinabove. Classical computer system 72 may take the form of a personal computer, application-server computer, or any other computing device.

Classical computer system 72 includes a logic system 74 and a computer-memory system 76. Classical computer system 72 may optionally include a display system 78, an input system 80, a network system 82, and/or other systems not shown in the drawings.

Logic system 74 includes one or more physical devices configured to execute instructions. For example, the logic system may be configured to execute instructions that are part of at least one operating system (OS), application, service, and/or other program construct. The logic system may include at least one hardware processor (e.g., microprocessor, central processor, central processing unit (CPU) and/or graphics processing unit (GPU)) configured to execute software instructions. Additionally or alternatively, the logic system may include at least one hardware or firmware device configured to execute hardware or firmware instructions. A processor of the logic system may be single-core or multi-core, and the instructions executed thereon may be configured for sequential, parallel, and/or distributed processing. Individual components of the logic system optionally may be distributed among two or more separate devices, which may be remotely located and/or configured for coordinated processing. Aspects of the logic system may be virtualized and executed by remotely-accessible, networked computing devices configured in a cloud-computing configuration.

Computer-memory system 76 includes at least one physical device configured to temporarily and/or permanently hold computer system information, such as data and instructions executable by logic system 74. In the illustrated example, computer-memory system 76 is holding instruction code corresponding to quantum-code simulator 84 and debugger 86. When the computer-memory system includes two or more devices, the devices may be collocated or remotely located. Computer-memory system 76 may include at least one volatile, nonvolatile, dynamic, static, read/write, read-only, random-access, sequential-access, location-addressable, file-addressable, and/or content-addressable computer-memory device. Computer-memory system 76 may include at least one removable and/or built-in computer-memory device. When the logic system executes instructions, the state of computer-memory system 76 may be transformed-*e.g*., to hold different data.

Aspects of logic system 74 and computer-memory system 76 may be integrated together into one or more hardware-logic components. Any such hardware-logic component may include at least one program- or application-specific integrated circuit (PASIC / ASIC), program- or application-specific standard product (PSSP / ASSP), system-on-a-chip (SOC), or complex programmable logic device (CPLD), for example.

Logic system 74 and computer-memory system 76 may cooperate to instantiate one or more logic machines or engines. As used herein, the terms 'machine' and 'engine' each refer collectively to a combination of cooperating hardware, firmware, software, instructions, and/or any other components that provide computer system functionality. In other words, machines and engines are never abstract ideas and always have a tangible form. A machine or engine may be instantiated by a single computing device, or a machine or engine may include two or more subcomponents instantiated by two or more different computing devices. In some implementations, a machine or engine includes a local component (*e.g*., a software application executed by a computer system processor) cooperating with a remote component (*e.g*., a cloud computing service provided by a network of one or more server computer systems). The software and/or other instructions that give a particular machine or engine its functionality may optionally be saved as one or more unexecuted modules on one or more computer-memory devices.

Machines and engines may be implemented using any suitable combination of machine learning (ML) and artificial intelligence (AI) techniques. Non-limiting examples of techniques that may be incorporated in an implementation of one or more machines include support vector machines, multi-layer neural networks, convolutional neural networks (*e.g*., spatial convolutional networks for processing images and/or video, and/or any other suitable convolutional neural network configured to convolve and pool features across one or more temporal and/or spatial dimensions), recurrent neural networks (*e.g*., long short-term memory networks), associative memories (*e.g*., lookup tables, hash tables, bloom filters, neural Turing machines and/or neural random-access memory) unsupervised spatial and/or clustering methods (*e.g*., nearest neighbor algorithms, topological data analysis, and/or k-means clustering), and/or graphical models (*e.g*., (hidden) Markov models, Markov random fields, (hidden) conditional random fields, and/or AI knowledge bases)).

When included, display system 78 may be used to present a visual representation of data held by computer-memory system 76. The visual representation may take the form of a graphical user interface (GUI) in some examples. The display system may include one or more display devices utilizing virtually any type of technology. In some implementations, display system may include one or more virtual-, augmented-, or mixed reality displays.

When included, input system 80 may comprise or interface with one or more input devices. An input device may include a sensor device or a user input device. Examples of user input devices include a keyboard, mouse, or touch screen.

When included, network system 82 may be configured to communicatively couple classical computer system 72 with one or more other computer systems. The network system may include wired and/or wireless communication devices compatible with one or more different communication protocols. The network system may be configured for communication via personal-, local- and/or wide-area networks.

This disclosure is presented by way of example and with reference to the attached drawing figures. Components, process steps, and other elements that may be substantially the same in one or more of the figures are identified coordinately and described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible. As such, various acts illustrated and/or described may be performed in the sequence illustrated and/or described, in other sequences, in parallel, or omitted. Likewise, the order of the above-described processes may be changed.

## Claims

1. A quantum-computation method comprising:
receiving a quantum circuit for execution on a quantum computer (10), the quantum computer (10) having a plurality of physical qubits (14) associated with a corresponding plurality of physical particles, the plurality of physical particles defining a quantum state;
decomposing the quantum circuit into a sequence of operations including a total spin-state measurement on two physical particles corresponding to exactly two physical qubits or two physical particles corresponding to exactly two logical qubits, wherein the logical qubits are a group of physical qubits and each of the sequence of operations is selected from:
a pair of orthogonal single-qubit Clifford operations; and
the total spin-state measurement;
wherein the total spin-state measurement distinguishes a spin triplet of the two physical particles from a spin singlet of the two physical particles and the pair of orthogonal single-qubit Clifford operations includes a Clifford X rotation operation and a Clifford Z rotation operation; and
applying, by an execution engine, the sequence of operations on the plurality of physical particles to thereby transform the quantum state according to the quantum circuit.

2. The method of claim 1 wherein the total spin-state measurement is SU(2)-invariant and therefore unresponsive to decoherence of the quantum state in a substantially SU(2)- invariant noise environment.

3. The method of claim 1 wherein the quantum circuit defines a concurrent two-qubit measurement.

4. The method of claim 3 wherein the concurrent two-qubit measurement is a two qubit measurement in a Bell basis.

5. The method of claim 1 wherein the sequence of operations provides teleportation of one or more qubit states onto the plurality of physical qubits.

6. The method of claim 1 wherein the quantum circuit includes preparation of a pure state in one of the plurality of physical qubits.

7. The method of claim 1 wherein the quantum circuit includes application of a Hadamard gate or an S gate.

8. The method of claim 1 wherein the quantum circuit defines a permutational quantum computation, and wherein the sequence of operations provides a weak-model simulation of the permutational quantum computation.

9. A quantum computer (10) comprising:
a plurality of physical qubits (14) associated with a corresponding plurality of physical particles, the plurality of physical particles defining a quantum state;
an input engine (40) configured to receive a quantum circuit for execution on the quantum computer (10);
a decomposition engine (42) configured to decompose the quantum circuit into a sequence of operations including a total spin-state measurement on two particles corresponding to exactly two physical qubits or two physical particles corresponding to exactly two logical qubits, wherein the logical qubits are a group of physical qubits and each of the sequence of operations is selected from:
a pair of orthogonal single-qubit Clifford operations; and
the total spin-state measurement;
wherein the total spin-state measurement distinguishes a spin triplet of the two physical particles from a spin singlet of the two physical particles and the pair of orthogonal single-qubit Clifford operations includes a Clifford X rotation operation and a Clifford Z rotation operation; and
an execution engine (44) configured to apply the sequence of operations on the plurality of physical particles to thereby transform the quantum state according to the quantum circuit.

## Patentansprüche

1. Quantenberechnungsverfahren, umfassend:
Empfangen einer Quantenschaltung zur Ausführung auf einem Quantencomputer (10), wobei der Quantencomputer (10) eine Vielzahl von physikalischen Qubits (14) aufweist, die einer entsprechenden Vielzahl von physikalischen Teilchen zugeordnet sind, wobei die Vielzahl von physikalischen Teilchen einen Quantenzustand definiert;
Zerlegen der Quantenschaltung in eine Sequenz von Operationen, die eine Gesamtspinzustandsmessung an zwei physikalischen Teilchen, die exakt zwei physikalischen Qubits entsprechen, oder an zwei physikalischen Teilchen, die exakt zwei logischen Qubits entsprechen, einschließt, wobei die logischen Qubits eine Gruppe von physikalischen Qubits sind und jede der Sequenz von Operationen ausgewählt ist aus:
einem Paar orthogonaler Einzel-Qubit-Clifford-Operationen; und
der Gesamtspinzustandsmessung;
wobei die Gesamtspinzustandsmessung ein Spin-Triplett der zwei physikalischen Teilchen von einem Spin-Singulett der zwei physikalischen Teilchen unterscheidet und das Paar orthogonaler Einzel-Qubit-Clifford-Operationen eine Clifford-X-Rotationsoperation und eine Clifford-Z-Rotationsoperation einschließt; und
Anwenden, durch eine Ausführungs-Engine,
der Sequenz von Operationen auf die Vielzahl von physikalischen Teilchen, um dadurch den Quantenzustand gemäß der Quantenschaltung zu transformieren.

2. Verfahren nach Anspruch 1, wobei die Gesamtspinzustandsmessung SU(2)-invariant ist und daher auf Dekohärenz des Quantenzustands in einer im Wesentlichen SU(2)-invarianten Rauschumgebung nicht reagiert.

3. Verfahren nach Anspruch 1, wobei die Quantenschaltung eine gleichzeitige Zwei-Qubit-Messung definiert.

4. Verfahren nach Anspruch 3, wobei die gleichzeitige Zwei-Qubit-Messung eine Zwei-Qubit-Messung in einer Bell-Basis ist.

5. Verfahren nach Anspruch 1, wobei die Sequenz von Operationen eine Teleportation eines oder mehrerer Qubit-Zustände auf die mehreren physikalischen Qubits bereitstellt.

6. Verfahren nach Anspruch 1, wobei die Quantenschaltung die Präparation eines reinen Zustands in einem der Vielzahl von physikalischen Qubits einschließt.

7. Verfahren nach Anspruch 1, wobei die Quantenschaltung die Anwendung eines Hadamard-Gatters oder eines S-Gatters einschließt.

8. Verfahren nach Anspruch 1, wobei die Quantenschaltung eine permutative Quantenberechnung definiert, und wobei die Sequenz von Operationen eine Simulation schwacher Modelle der permutativen Quantenberechnung bereitstellt.

9. Quantencomputer (10), umfassend:
eine Vielzahl von physikalischen Qubits (14), die einer entsprechenden Vielzahl von physikalischen Teilchen zugeordnet sind, wobei die Vielzahl von physikalischen Teilchen einen Quantenzustand definiert;
eine Eingabe-Engine (40), die konfiguriert ist, um eine Quantenschaltung zur Ausführung auf dem Quantencomputer (10) zu empfangen;
eine Zerlegungs-Engine (42), die konfiguriert ist, um die Quantenschaltung in eine Sequenz von Operationen zu zerlegen, die eine Gesamtspinzustandsmessung an zwei Teilchen, die exakt zwei physikalischen Qubits entsprechen, oder an zwei physikalischen Teilchen, die exakt zwei logischen Qubits entsprechen, einschließt, wobei die logischen Qubits eine Gruppe von physikalischen Qubits sind und jede der Sequenz von Operationen ausgewählt ist aus:
einem Paar orthogonaler Einzel-Qubit-Clifford-Operationen; und
der Gesamtspinzustandsmessung;
wobei die Gesamtspinzustandsmessung ein Spin-Triplett der zwei physikalischen Teilchen von einem Spin-Singulett der zwei physikalischen Teilchen unterscheidet und das Paar orthogonaler Einzel-Qubit-Clifford-Operationen eine Clifford-X-Rotationsoperation und eine Clifford-Z-Rotationsoperation einschließt; und
einer Ausführungs-Engine (44), die konfiguriert ist, um die Sequenz von Operationen auf die Vielzahl von physikalischen Teilchen anzuwenden, um dadurch den Quantenzustand gemäß der Quantenschaltung zu transformieren.

## Revendications

1. Procédé de calcul quantique comprenant :
la réception d'un circuit quantique destiné à être exécuté sur un ordinateur quantique (10), l'ordinateur quantique (10) ayant une pluralité de qubits physiques (14) associés à une pluralité correspondante de particules physiques, la pluralité de particules physiques définissant un état quantique ;
la décomposition du circuit quantique en une séquence d'opérations comportant une mesure d'état de spin total sur deux particules physiques correspondant à exactement deux qubits physiques ou sur deux particules physiques correspondant à exactement deux qubits logiques, dans lequel les qubits logiques sont un groupe de qubits physiques et chacune des séquences d'opérations est sélectionnée parmi :
une paire d'opérations de Clifford orthogonales sur un seul qubit ; et
la mesure d'état de spin global ;
dans lequel la mesure d'état de spin total distingue un triplet de spin des deux particules physiques d'un singulet de spin des deux particules physiques et la paire d'opérations de Clifford orthogonales sur un seul qubit comporte une opération de rotation X de Clifford et une opération de rotation Z de Clifford ; et
l'application, par un moteur d'exécution,
la séquence d'opérations sur la pluralité de particules physiques pour transformer ainsi l'état quantique selon le circuit quantique.

2. Procédé selon la revendication 1 dans lequel la mesure d'état de spin total est invariante sous SU(2) et par conséquent insensible à la décohérence de l'état quantique dans un environnement de bruit sensiblement invariant sous SU(2).

3. Procédé selon la revendication 1 dans lequel le circuit quantique définit une mesure simultanée de deux qubits.

4. Procédé selon la revendication 3 dans lequel la mesure simultanée de deux qubits est une mesure de deux qubits dans une base de Bell.

5. Procédé selon la revendication 1 dans lequel la séquence d'opérations fournit la téléportation d'un ou plusieurs états de qubits vers la pluralité de qubits physiques.

6. Procédé selon la revendication 1 dans lequel le circuit quantique comporte la préparation d'un état pur dans l'un parmi la pluralité de qubits physiques.

7. Procédé selon la revendication 1 dans lequel le circuit quantique comporte l'application d'une porte de Hadamard ou d'une porte S.

8. Procédé selon la revendication 1 dans lequel le circuit quantique définit un calcul quantique permutationnel, et dans lequel la séquence d'opérations fournit une simulation à modèle faible du calcul quantique permutationnel.

9. Ordinateur quantique (10) comprenant :
une pluralité de qubits physiques (14) associés à une pluralité correspondante de particules physiques, la pluralité de particules physiques définissant un état quantique ;
un moteur d'entrée (40) configuré pour recevoir un circuit quantique destiné à être exécuté sur l'ordinateur quantique (10) ;
un moteur de décomposition (42) configuré pour décomposer le circuit quantique en une séquence d'opérations comportant une mesure d'état de spin total sur deux particules correspondant à exactement deux qubits physiques ou sur deux particules physiques correspondant à exactement deux qubits logiques, dans lequel les qubits logiques sont un groupe de qubits physiques et chacune des séquences d'opérations est sélectionnée parmi :
une paire d'opérations de Clifford orthogonales sur un seul qubit ; et
la mesure d'état de spin global ;
dans lequel la mesure d'état de spin total distingue un triplet de spin des deux particules physiques d'un singulet de spin des deux particules physiques et la paire d'opérations de Clifford orthogonales sur un seul qubit comporte une opération de rotation X de Clifford et une opération de rotation Z de Clifford ; et
un moteur d'exécution (44) configuré pour appliquer la séquence d'opérations sur la pluralité de particules physiques pour transformer ainsi l'état quantique selon le circuit quantique.
